(19) Europäisches Patentamt
European Patent Office
Office européen des brevets

(11) **EP 4 210 130 A1**

(12) **EUROPEAN PATENT APPLICATION**
published in accordance with Art. 153(4) EPC

(43) Date of publication:
**12.07.2023 Bulletin 2023/28**

(21) Application number: **21864368.2**

(22) Date of filing: **01.09.2021**

(51) International Patent Classification (IPC):
**H01M 4/36** (2006.01)    **H01M 4/525** (2010.01)

(52) Cooperative Patent Classification (CPC):
**H01M 4/36; H01M 4/525;** Y02E 60/10

(86) International application number:
**PCT/JP2021/032127**

(87) International publication number:
**WO 2022/050311 (10.03.2022 Gazette 2022/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.09.2020 JP 2020149334**

(71) Applicant: SUMITOMO CHEMICAL COMPANY, LIMITED
Tokyo 103-6020 (JP)

(72) Inventors:
• **TACHIBANA, Shingo**
**Niihama-shi, Ehime 792-8521 (JP)**
• **KURIKI, Ryo**
**Niihama-shi, Ehime 792-8521 (JP)**

(74) Representative: **Vossius & Partner**
**Patentanwälte Rechtsanwälte mbB**
**Siebertstraße 3**
**81675 München (DE)**

(54) **POSITIVE-ELECTRODE ACTIVE MATERIAL FOR LITHIUM SECONDARY BATTERY, POSITIVE ELECTRODE FOR LITHIUM SECONDARY BATTERY, AND LITHIUM SECONDARY BATTERY**

(57)    A positive electrode active material for a lithium secondary battery, containing at least Li, Ni, and an element X, containing particles including a coating on a surface of a lithium metal composite oxide, in which the coating contains the element X, the element X is one or more elements selected from the group consisting of Al, Ti, Nb, Zr, P, B, Mg, Ba, Si, Sn, and W, and a formula (1) and a formula (2) are satisfied.

$$(2)\ \sigma X \leq 13.0$$

$$(1)\ 0.20 \leq X_{at}/Li_{at}$$

EP 4 210 130 A1

## Description

[Technical Field]

The present invention relates to a positive-electrode active material for a lithium secondary battery, a positive electrode for a lithium secondary battery, and a lithium secondary battery.
Priority is claimed on Japanese Patent Application No. 2020-149334, filed in Japan on September 4, 2020, the content of which is incorporated herein by reference.

[Background Art]

Lithium metal composite oxides are being used as positive electrode active materials for lithium secondary batteries. Attempts of putting lithium secondary batteries into practical use not only for small-sized power sources in mobile phone applications, notebook personal computer applications, and the like but also for medium-sized or large-sized power sources in automotive applications, power storage applications, and the like have already been underway.
A variety of attempts are underway in order to improve the battery characteristics of lithium secondary batteries.
For example, Patent Document 1 describes a positive electrode active material for a non-aqueous electrolyte secondary battery containing lithium-nickel composite oxide particles. The positive electrode active material described in Patent Document 1 includes a coating layer containing tungsten on the surface.

[Citation List]

[Patent Document]

[Patent Document 1]
WO2019/103037

[Summary of Invention]

[Technical Problem]

As the application fields of lithium secondary batteries progress, additional improvement in initial discharge capacities and cycle retention rates is in demand.
The present invention has been made in view of the above-described circumstances, and an object of the present invention is to provide a positive electrode active material for a lithium secondary battery capable of increasing the initial discharge capacities and the cycle retention rates of lithium secondary batteries, a positive electrode for a lithium secondary battery, and a lithium secondary battery.

[Solution to Problem]

The present invention includes [1] to [6].

[1] A positive electrode active material for a lithium secondary battery, containing at least Li, Ni, and an element X, containing particles including a coating on a surface of a lithium metal composite oxide, in which the coating contains the element X, the element X is one or more elements selected from the group consisting of Al, Ti, Nb, Zr, P, B, Mg, Ba, Si, Sn, and W, and a formula (1) and a formula (2) are satisfied.

$$(1)\ 0.20 \leq X_{at}/Li_{at}$$

($X_{at}$ is an abundance of the element X near the surface of the particle, which is measured by X-ray photoelectron spectroscopy. $Li_{at}$ is an abundance of Li near the surface of the particle, which is measured by X-ray photoelectron spectroscopy.)

$$(2)\ \sigma X \leq 13.0$$

($\sigma X$ is a standard deviation calculated from the abundances of the element X near the surfaces of a plurality of the particles, which is measured by scanning electron microscope-energy dispersive X-ray spectroscopy.)

[2] The positive electrode active material for the lithium secondary battery according to [1], in which no diffraction peak is observed within a range of diffraction angles $2\theta = 40°$ to $43°$ in X-ray diffraction measurement using CuKa rays.

[3] The positive electrode active material for the lithium secondary battery according to [1] or [2], in which, in the X-ray diffraction measurement using CuKa rays, two diffraction peaks are present within a range of $2\theta = 38.5 \pm 1°$, and, when, between the two diffraction peaks, the diffraction peak on a low angle side is defined as a peak A, and the diffraction peak on a high angle side is defined as a peak B, a formula (3) and a formula (4) are satisfied.

$$(3)\ L_A/L_B \leq 1.50$$

($L_A$ is a crystallite size obtained from the peak A, and $L_B$ is a crystallite size obtained from the peak B.)

$$(4)\ 0.25 \leq I_A/I_B \leq 0.60$$

($I_A$ is an integrated intensity of the peak A, and $I_B$ is an integrated intensity of the peak B.)

[4] The positive electrode active material for the lithium secondary battery according to any one of [1] to [3], in which, in the X-ray diffraction measurement using CuKa rays, when a diffraction peak present within a range of $2\theta = 18.5 \pm 1°$ is defined as a peak C, and a diffraction peak present within a range of $2\theta = 44.5 \pm 1°$ is defined as a peak D, a formula (5) and a formula (6) are satisfied.

$$(5)\ 1.25 \leq L_C/L_D$$

($L_c$ is a crystallite size obtained from the peak C, and $L_D$ is a crystallite size obtained from the peak D.)

$$(6)\ 1.1 \leq I_C/I_D$$

($I_c$ is an integrated intensity of the peak C, and $I_D$ is an integrated intensity of the peak D.)

[5] A positive electrode for a lithium secondary battery, containing the positive electrode active material for the lithium secondary battery according to any one of [1] to [4].

[6] A lithium secondary battery, containing the positive electrode for the lithium secondary battery according to [5].

[Advantageous Effects of Invention]

According to the present invention, it is possible to provide a positive electrode active material for a lithium secondary battery capable of increasing the initial discharge capacities and the cycle retention rates of lithium secondary batteries, a positive electrode for a lithium secondary battery, and a lithium secondary battery.

[Brief Description of Drawings]

FIG. 1A is a schematic configuration view showing an example of a lithium secondary battery.
FIG. 1B is a schematic configuration view showing the example of the lithium secondary battery.
FIG. 2 is a schematic view showing a laminate that an all-solid-state lithium-ion secondary battery includes.
FIG. 3 is a schematic view showing an entire configuration of the all-solid-state lithium secondary battery.

[Description of Embodiments]

In the present specification, Ni refers not to a nickel metal but to a nickel atom, and Co, Mn, Li, and the like also, similarly, each refer to an atom.

<Definition>

In the present specification, the initial discharge capacity of a lithium secondary battery is evaluated using a lithium secondary battery produced by the method described in the following section [Production of lithium secondary battery (coin-type half cell)] using a positive electrode for a lithium secondary battery produced by the method described in the following section [Production of positive electrode for lithium secondary battery].

In the present specification, "large initial discharge capacity" means that the value of the initial discharge capacity measured by a method described in the following section [Charge and discharge evaluation: initial discharge capacity] is more than 198 mAh/g. In addition, "high cycle retention rate" means that the value of the cycle retention rate measured by the method described in the following section [Charge and discharge evaluation: cycle retention rate] is more than 85%.

[Production of positive electrode for lithium secondary battery]

A paste-like positive electrode mixture is prepared by adding and kneading a positive electrode active material, a conductive material (acetylene black), and a binder (PVdF) in proportions in which a composition of positive electrode active material: conductive material:binder = 92:5:3 (mass ratio) is achieved. During the preparation of the positive electrode mixture, N-methyl-2-pyrrolidone is used as an organic solvent.

The obtained positive electrode mixture is applied to a 40 $\mu$m-thick Al foil, which is to serve as a current collector, and dried in a vacuum at 150°C for 8 hours, thereby obtaining a positive electrode for a lithium secondary battery. The electrode area of this positive electrode for a lithium secondary battery is set to 1.65 cm$^2$.

[Production of lithium secondary battery (coin-type half cell)]

The following operation is performed in a glove box under an argon atmosphere.

A positive electrode for a lithium secondary battery produced by the method described in the section [Production of positive electrode for lithium secondary battery] is placed on the lower lid of a part for a coin type battery R2032 (manufactured by Hohsen Corp.) with the aluminum foil surface facing downward, and a separator (polyethylene porous film) is placed on the positive electrode. 300 $\mu$l of an electrolyte solution is poured thereinto. As the electrolyte solution, an electrolyte solution obtained by dissolving $LiPF_6$ in a liquid mixture of ethylene carbonate, dimethyl carbonate, and ethyl methyl carbonate in a volume ratio of 30:35:35 in a proportion of 1.0 mol/l is used.

Next, lithium metal was used as a negative electrode, and the negative electrode was placed on the upper side of the laminated film separator. An upper lid was placed through a gasket and caulked using a caulking machine, thereby producing a lithium secondary battery (coin-type half cell R2032; hereinafter, referred to as "half cell" in some cases.).

[Charge and discharge evaluation: initial discharge capacity]

An assembled coin-type lithium secondary battery is left to stand at room temperature for 12 hours to sufficiently impregnate the separator and the positive electrode mixture layer with an electrolyte solution.

At a testing temperature of 25°C, the set current value is set to 0.2CA for both charging and the discharging, and each of constant-current constant-voltage charging and constant-current-discharging is performed. Lithium metal is used as a negative electrode, the maximum charge voltage is set to 4.3 V, and the minimum discharge voltage is set to 2.5 V. The discharge capacity is measured, and the obtained value is defined as the "initial discharge capacity" (mAh/g).

Next, constant-current, constant-voltage charging and constant-current discharging are repeated at the testing temperature of 25°C under the following conditions. The number of times of repetition of a charge and discharge cycle is set to 50 times.

Charging: Set current value of 1CA, maximum voltage of 4.3 V, constant-voltage constant-current charging
Discharging: Set battery value of 1CA, minimum voltage of 2.5 V, constant-current-discharging

[Charge and discharge evaluation: cycle retention rate]

From the discharge capacity at the first cycle and the discharge capacity at the 50$^{th}$ cycle, the cycle retention rate is calculated by the following formula. As the cycle retention rate increases, a decrease in the battery capacity after the repetition of charge and discharge is further suppressed, which is desirable as the battery performance.

$$\text{Cycle retention rate (\%)} = 50^{th} \text{ cycle discharge capacity (mAh/g)/first cycle}$$

$$\text{discharge capacity (mAh/g)} \times 100$$

In the present specification, a metal composite compound will be referred to as "MCC" as an abbreviation in some cases.

In the present specification, a positive electrode active material for a lithium secondary battery will be referred to as "CAM" as an abbreviation for cathode active material for lithium secondary batteries or "positive electrode active material" in some cases.

In the present specification, lithium metal composite oxide will be referred to as "LiMO" as an abbreviation in some cases.

In one aspect of the present embodiment, particles contained in CAM are secondary particles that are each an aggregate of primary particles or primary particles that are independently present from the secondary particles.

"Primary particle" means a particle in which no clear grain boundary is visible from the particle surface in the case of being observed in a visual field magnified 5000 times or more and 20000 times or less with a scanning electron microscope or the like. In addition, "secondary particle" is a particle that is aggregation of the primary particles and means a particle having a spherical or substantially spherical shape.

In one aspect of the present embodiment, CAM is a powder.

In the present embodiment, "X-ray photoelectron spectroscopy" will be referred to as "XPS".

According to XPS, it is possible to analyze a configuration element or electronic state near the surfaces of the particles contained in CAM by measuring the energies of photoelectrons that are generated when the surfaces of the particles in CAM are irradiated with X-rays.

In the present embodiment, the binding energies of photoelectrons that are emitted from the surface of CAM when irradiated with AlKα rays as excitation X-rays are analyzed. According to XPS, it is possible to analyze the surface state of the particles contained in CAM.

As the X-ray photoelectron spectrometer, for example, K-Alpha manufactured by Thermo Fisher Scientific Inc. can be used.

In the present embodiment, scanning electron microscope-energy dispersive X-ray spectroscopy will be referred to as "SEM-EDX".

As a scanning electron microscope-energy dispersive X-ray spectrometer, for example, a Schottky field emission scanning electron microscope equipped with Ultim Extreme of Oxford Instruments as an EDX detector (manufactured by JEOL Ltd., product name JSM-7900F) can be used.

[X-ray diffraction measurement using CuKa rays]

The powder X-ray diffraction measurement is performed using an X-ray diffractometer. As the X-ray diffractometer, it is possible to use, for example, LINT2000 manufactured by Rigaku Corporation.

In the powder X-ray diffraction measurement, specifically, the powder of CAM is loaded into a dedicated substrate, and the measurement is performed using a Cu-Kα radiation source under conditions of a diffraction angle of $2\theta$ = 10° to 90°, a sampling width of 0.02°, and a scan speed of 4 °/min, thereby obtaining a powder X-ray diffraction pattern.

[Analysis of X-ray diffraction pattern]

Each value is calculated by analyzing a predetermined peak from the obtained powder X-ray diffraction pattern using integrated powder X-ray analysis software.

As the integrated powder X-ray analysis software, for example, JADE manufactured by Materials Data, Inc. can be used.

<CAM>

CAM of the present embodiment contains at least Li, Ni, and an element X and contains particles including a coating on the surface of LiMO. CAM of the present embodiment includes a plurality of the particles.

The coating contains the element X. The element X is one or more elements selected from the group consisting of Al, Ti, Nb, Zr, P, B, Mg, Ba, Si, Sn, and W.

"Coating" means that a coating is present on a part or all of the surface of LiMO. The coating needs to be present on the surface of LiMO and may be present on the entire surface of LiMO or may be present on a part of the surface of LiMO.

«Formula (1)»

CAM satisfies a formula (1).

$$(1)\ 0.20 \leq X_{at}/Li_{at}$$

$X_{at}$ is the abundance of the element X near the surface of the particle, which is measured by XPS.

$Li_{at}$ is the abundance of Li near the surface of the particle, which is measured by XPS.

Measurement by XPS makes it possible to confirm the electronic state of the element X present near the surface of the particle.

The "near the surface of the particle" that is measured by XPS refers to the outermost surface of the particle of CAM and a region from the outermost surface to a depth of approximately 10 nm toward the center of the particle.

In the case of a particle in which the coating is present on the entire surface of LiMO, the "near the surface of the particle" refers to a region from the outermost surface of the coating to a depth of approximately 10 nm toward the center of the particle.

In the case of a particle including a coating on a part of the surface of LiMO, the "near the surface of the CAM" refers to, in the surface of the particle, a region from the outermost surface of the coating to a depth of approximately 10 nm toward the center of the particle in a range where the coating is present on the surface of the particle and a region from the outermost surface of LiMO to a depth of approximately 10 nm toward the center of the particle in a range where the coating is not present.

The abundance of the element X near the surfaces of the particles in CAM is indicated by $X_{at}$. $X_{at}$, which is obtained by XPS measurement, is obtained based on the peak area of a configuration element containing the element X present near the surfaces of the particles in CAM.

Specifically, in the spectrum that is obtained by XPS measurement, the number of elements of each metal element is calculated from the peak area of each metal element present near the surfaces of the particles in CAM, and the abundance of the element X in the total value of the numbers of the elements of 100% is indicated by $X_{at}$.

Spectral peaks of the element X are Al2p, Ti2p, Zr3d, Nb3d, B1s, W4f, Mg2p, Ba3d, Si2p, Sn3d, and P2p.

[Method for measuring $X_{at}$]

$X_{at}$ is obtained by performing measurement by XPS using the X-ray photoelectron spectrometer.

$AlK\alpha$ rays are used as the X-ray source, and a flood gun (accelerating voltage: 0.3 V, current: 100 $\mu$A) is used for charge neutralization at the time of measurement.

As the measurement conditions of XPS, the spot size is set to 400 $\mu$m, the pass energy is set to 50 eV, the step is set to 0.1 eV, and the dwell time is set to 500 ms.

Regarding the obtained XPS spectrum, the number of elements of each metal element is calculated from the peak area of each metal element present near the surfaces of the particles in CAM using Avantage data system of Thermo Fisher Scientific Inc., and $X_{at}$, which is the abundance (atom%) of the element X in the total value of the numbers of the elements of 100%, is obtained.

In the present embodiment, charge correction is performed with the C1s peak set to 284.6 eV.

$X_{at}$ is derived from the abundance of an oxide of the element X configuring the coating or a compound of the element X and lithium configuring the coating.

In the present embodiment, the abundance of a Li element near the surfaces of the particles in CAM is indicated by $Li_{at}$.

[Method for measuring $Li_{at}$]

$Li_{at}$, which is obtained by XPS measurement, is obtained based on the spectral peak area of a configuration element containing the Li element present near the surfaces of the particles in CAM. Specifically, in the spectrum that is obtained by XPS measurement, the number of elements of each metal element is calculated from the peak area of each metal element present near the surfaces of the particles in CAM, and the abundance of the Li element in the total value of the numbers of the elements of 100% is indicated by $Li_{at}$. Charge correction is performed with the C1s peak set to 284.6 eV. The spectral peak of Li is Li1s.

The spectral peak of Li is Li1s. $X_{at}/Li_{at}$ is calculated from the obtained $X_{at}$ and $Li_{at}$.

$X_{at}/Li_{at}$ is preferably 0.25 or more, more preferably 0.28 or more, and still more preferably 0.30 or more.

In addition, as $X_{at}/Li_{at}$, for example, 1.0 or less, 0.9 or less, 0.8 or less, and 0.7 or less are exemplary examples.

The upper limit value and lower limit value of $X_{at}/Li_{at}$ can be randomly combined together.

As examples of the combination of $X_{at}/Li_{at}$, 0.2 or more and 1.0 or less, 0.25 or more and 0.9 or less, 0.28 or more and 0.8 or less, and 0.30 or more and 0.7 or less are exemplary examples.

The coating can be a compound in which the element X and Li bond to each other, that is, a compound containing the element X and Li. The compound in which the element X and Li bond to each other will be referred to as the "X-Li compound". The X-Li compound may further bond to an oxygen atom. The X-Li compound has lithium ion conductivity.

A larger $X_{at}$ means a larger amount of the coating that is present on the surfaces of the particles in CAM. When a large amount of the coating is present on the surfaces of the particles in CAM, the reaction between CAM and an electrolyte solution is likely to be suppressed, and it is possible to increase the cycle retention rates of lithium secondary batteries.

Incidentally, a larger $Li_{at}$ means a larger amount of Li that is present on the surfaces of the particles in CAM. When excess Li is present on the surfaces of the particles in CAM, for example, lithium hydroxide or lithium carbonate may be formed due to a reaction of Li with moisture, carbon dioxide, or other compound having a carbon atom. These have low lithium ion conductivity and may act as resistance to the intercalation and desorption of lithium ions. In addition, these may decompose at the time of a charging reaction and a discharging reaction to generate gas.

When $X_{at}/Li_{at}$ is within the above-described range, the coating is appropriately present on the surfaces of the particles in CAM, and lithium hydroxide, lithium carbonate, or the like is less likely to be formed, and thus it is possible to increase the initial discharge capacities and cycle retention rates of lithium secondary batteries.

$X_{at}$ is preferably 12.0 or more, more preferably 14.0 or more, and still more preferably 16.0 or more from the viewpoint of enabling an increase in the initial discharge capacities and cycle retention rates of lithium secondary batteries. In addition, $X_{at}$ is preferably 40.0 or less, more preferably 36.0 or less, and still more preferably 34.0 or less from the viewpoint of enabling an increase in the initial discharge capacities and cycle retention rates of lithium secondary batteries. When $X_{at}$ is the above-described upper limit value or less, since the coating is more appropriately present on the surfaces of the particles in CAM, and it is even less likely for the intercalation and desorption of lithium ions to be resisted.

The upper limit value and lower limit value of $X_{at}$ can be randomly combined together. As examples of the combination of $X_{at}$, 12.0 or more and 40.0 or less, 14.0 or more and 36.0 or less, and 16.0 or more and 34.0 or less are exemplary examples.

$Li_{at}$ is preferably 10.0 or more, more preferably 25.0 or more, and still more preferably 40.0 or more from the viewpoint of enabling an increase in the initial discharge capacities and cycle retention rates of lithium secondary batteries. In addition, $Li_{at}$ is preferably 85.0 or less, more preferably 75.0 or less, and still more preferably 65.0 or less from the viewpoint of enabling an increase in the initial discharge capacities and cycle retention rates of lithium secondary batteries.

The upper limit value and lower limit value of $Li_{at}$ can be randomly combined together. As examples of the combination of $Li_{at}$, 10.0 or more and 85.0 or less, 25.0 or more and 75.0 or less, and 40.0 or more and 65.0 or less are exemplary examples.

«Formula (2)»

CAM of the present embodiment satisfies a formula (2).

$$(2)\ \sigma X \leq 13.0$$

($\sigma X$ is a standard deviation calculated from the abundances of the element X near the surfaces of a plurality of the particles, which is measured by scanning electron microscope-energy dispersive X-ray spectroscopy.)

[Method for measuring $\sigma X$]

First, carbon tape is stuck onto a sample table of a scanning electron microscope, and CAM is disposed so that 100 or more particles are placed thereon. In a case where the number of particles in CAM is less than 100, a plurality of CAMs is disposed such that 100 or more particles are placed on the sample table.

CAM disposed as described above is irradiated with an electron beam, and the abundance of the element X in each particle contained in CAM is obtained from the detection intensity of a characteristic X-ray observed for the element X.

The abundance of the element X is the proportion of the number of atoms of the element X in the total value of 100% of the numbers of the atoms of metal elements excluding Li contained in the particles in the CAM. $\sigma X$, which is the standard deviation of the abundance (atom%) of the element X, is obtained using the values of the abundance of the element X in three or more particles among the obtained measurement results.

As the characteristic X-ray, for example, Al is a K ray, Ti is a K ray, Nb is an L ray, Zr is an L ray, P is a K ray, B is a K ray, Mg is a K ray, Ba is an M ray, Si is a K ray, Sn is an L ray, and W is an M ray.

The above-described scanning electron microscope-energy dispersive X-ray spectrometer is used. The accelerating voltage is set to 7 kV for Ti and 3 kV for other elements, and the working distance is set to 10 mm.

$\sigma X$ is 13.0 or less, preferably 11.5 or less, and more preferably 10 or less.

$\sigma X$ is preferably as close to 0 as possible, and the lower limit value is not limited. Examples of the lower limit value of σX include 0 or more, 0.05 or more, and 0.1 or more.

The upper limit value and lower limit value of σX can be randomly combined together.

As examples of the combination of the upper limit value and lower limit value of σX, 0 or more and 13.0 or less, 0.05 or more and 11.5 or less, and 0.1 or more and 10 or less are exemplary examples.

In CAM that satisfies the formula (2), among the individual particles contained in CAM, a variation in the abundance of the element X on the surface of the particle is small. A small variation in the abundance of the element X indicates that the composition of the coating is uniform among the particles of CAM.

In CAM that satisfies the formula (1), it is conceivable that the coating is appropriately present and lithium hydroxide, lithium carbonate, or the like, which may act as resistance to the migration of lithium ions, is less likely to be formed.

Furthermore, CAM that satisfies the formula (2) means that a variation in the composition of the surface of the particle in CAM is small.

Therefore, in CAM that satisfies the formula (1) and the formula (2), it is conceivable that particles that are less likely to resist the migration of lithium ions are uniformly present. Therefore, the use of CAM of the present embodiment makes it possible to increase the initial discharge capacities and the cycle retention rates of lithium secondary batteries.

In CAM of the present embodiment, in X-ray diffraction measurement using CuKα rays, no diffraction peak is preferably observed within a range of diffraction angles $2\theta = 40°$ to $43°$.

Specifically, in the powder X-ray diffraction pattern, it is preferable that no diffraction peak is observed between the diffraction peak at the highest angle present within a range of $2\theta = 38.5 \pm 1°$ and the diffraction peak present within a range of $2\theta = 44.5 \pm 1°$.

Here, "no diffraction peak is observed" means a case where there is no diffraction peak with an integrated intensity of 3.0% or more with respect to the maximum integrated intensity within a range of $2\theta = 10°$ to $90°$ (the total of the integrated intensities of the peaks present within the range of $2\theta = 10°$ to $90°$).

In CAM from which no diffraction peak is observed between the above-described diffraction peaks, it is conceivable that resistance to the migration of lithium ions is small due to the fact that the X-Li compound is amorphous, the amount of the X-Li compound is small relative to LiMO, or there is a small amount of an inert phase such as lithium hydroxide or lithium carbonate. Therefore, the use of CAM of the present embodiment makes it possible to increase the initial discharge capacities and further increase the cycle retention rates of lithium secondary batteries.

«Formula (3)»

In the X-ray diffraction measurement of LiMO using CuKα rays, two diffraction peaks present within a range of $2\theta = 38.5 \pm 1°$ are determined. Here, "two diffraction peaks" are a first diffraction peak having the highest peak intensity and a second diffraction peak having the highest peak intensity following the first diffraction peak within the range of $2\theta = 38.5 \pm 1°$ in the powder X-ray diffraction pattern. Between the first diffraction peak and the second diffraction peak, the diffraction peak on the low angle side is defined as a peak A, and the diffraction peak on the high angle side is defined as a peak B.

$L_A/L_B$, which represents the ratio of $L_A$, which is the crystallite size obtained from the peak A, to $L_B$, which is the crystallite size obtained from the peak B, preferably satisfies the following formula (3). $L_A$ and $L_B$ each can be obtained from the half widths of the peak A and the peak B using the Scherrer formula $L = K\lambda/\beta\cos\theta$ (L: crystallite size, K: Scherrer constant, β: peak half width).

$$(3)\ L_A/L_B \leq 1.50$$

$L_A/L_B$ is preferably 1.4 or less, more preferably 1.35 or less, and still more preferably 1.3 or less.

$L_A/L_B$ is preferably 0.2 or more, more preferably 0.3 or more, and still more preferably 0.4 or more. The upper limit value and lower limit value of $L_A/L_B$ can be randomly combined together. As examples of the combination, $L_A/L_B$ of 0.2 or more and 1.4 or less, 0.3 or more and 1.35 or less, and 0.2 or more and 1.3 or less are exemplary examples.

«Formula (4)»

The ratio $I_A/I_B$ of $I_A$, which is the integrated intensity of the peak A, and $I_B$, which is the integrated intensity of the peak B, preferably satisfies the following formula (4).

$$(4)\ 0.25 \leq I_A/I_B \leq 0.60$$

$I_A/I_B$ is preferably 0.59 or less, more preferably 0.57 or less, and still more preferably 0.55 or less.

$I_A/I_B$ is preferably 0.26 or more, more preferably 0.28 or more, and still more preferably 0.30 or more. The upper limit value and lower limit value of $I_A/I_B$ can be randomly combined together. As examples of the combination, $I_A/I_B$ of 0.26 or more and 0.59 or less, 0.28 or more and 0.57 or less, and 0.30 or more and 0.55 or less are exemplary examples.

In CAM that satisfies the formula (3) and the formula (4), it is conceivable that a layered structure has favorably developed, and the intercalation reaction and desorption reaction of lithium ions are likely to progress. Therefore, it is possible to further increase the initial discharge capacities and the cycle retention rates of lithium secondary batteries.

«Formula (5)»

In the X-ray diffraction measurement of CAM using CuK$\alpha$ rays, a diffraction peak present within a range of $2\theta = 18.5 \pm 1°$ is defined as a peak C, and a diffraction peak present within a range of $2\theta = 44.5 \pm 1°$ is defined as a peak D.

$L_C/L_D$, which represents the ratio of $L_C$, which is the crystallite size obtained from the peak C, to $L_D$, which is the crystallite size obtained from the peak D, preferably satisfies the following formula (5). $L_C$ and $L_D$ each can be obtained from the half widths of the peak C and the peak D using the Scherrer formula $L = K\lambda/\beta\cos\theta$ (L: crystallite size, K: Scherrer constant, $\beta$: peak half width).

$$(5)\ 1.25 \leq L_C/L_D$$

$L_C/L_D$ is preferably 2.0 or less, more preferably 1.9 or less, and still more preferably 1.7 or less.

$L_C/L_D$ is preferably 1.3 or more, more preferably 1.4 or more, and still more preferably 1.45 or more. The upper limit value and lower limit value of $L_C/L_D$ can be randomly combined together. As examples of the combination, $L_C/L_D$ of 1.3 or more and 2.0 or less, 1.4 or more and 1.9 or less, and 1.45 or more and 1.7 or less are exemplary examples.

«Formula (6)»

The ratio $I_C/I_D$ of $I_C$, which is the integrated intensity of the peak C, and $I_D$, which is the integrated intensity of the peak D, preferably satisfies the following formula (6).

$$(6)\ 1.1 \leq I_C/I_D$$

$I_C/I_D$ is preferably 2.0 or less, more preferably 1.7 or less, and still more preferably 1.4 or less.

$I_C/I_D$ is preferably 1.15 or more, more preferably 1.18 or more, and still more preferably 1.2 or more. The upper limit value and lower limit value of $I_C/I_D$ can be randomly combined together. As examples of the combination, $I_C/I_D$ of 1.15 or more and 2.0 or less, 1.18 or more and 1.7 or less, or 1.2 or more and 1.4 or less are exemplary examples.

In CAM that satisfies the formula (5) and the formula (6), it is conceivable that a layered structure has been developed and ion mixing has a small influence. Therefore, it is possible to further increase the initial discharge capacities and the cycle retention rates of lithium secondary batteries.

<<Composition>>

CAM preferably contains an element M in addition to Li, Ni and the element X.

The element M is one or more elements selected from the group consisting of Co, Mn, Fe, Cu, Mo, Zn, Ga, and V.

CAM preferably satisfies the following composition formula (I).

$$Li[Li_m(Ni_{(1-n-p)}X_nM_p)_{1-m}]O_2 \cdots \qquad (I)$$

(Here, $-0.1 \leq m \leq 0.2$, $0 < p < 0.6$, and $0 < n \leq 0.2$ are satisfied.)

In the composition formula (I), m is preferably more than 0, more preferably 0.01 or more, and particularly preferably 0.02 or more from the viewpoint of increasing cycle retention rates. In addition, from the viewpoint of obtaining lithium secondary batteries having a high discharge rate characteristic, m is preferably 0.1 or less, more preferably 0.08 or less, and particularly preferably 0.06 or less.

The upper limit value and lower limit value of m can be randomly combined together.

m preferably satisfies $0 < m \leq 0.2$ and more preferably satisfies $0 < m \leq 0.1$.

In the composition formula (I), from the viewpoint of obtaining lithium secondary batteries having high discharge rate characteristics, $0 < n + p \leq 0.6$ is preferable, $0 < n + p \leq 0.5$ is more preferable, $0 < n + p \leq 0.30$ is still more preferable, and $0 < n + p \leq 0.25$ is particularly preferable.

In the composition formula (I), p is more preferably 0.05 or more and particularly preferably 0.07 or more from the viewpoint of obtaining lithium secondary batteries having a low internal resistance of the battery. In addition, p is preferably 0.5 or less and particularly preferably 0.4 or less from the viewpoint of obtaining lithium secondary batteries having high thermal stability.

The upper limit value and lower limit value of p can be randomly combined together. As examples of the combination, p's of 0.05 or more and 0.5 or less and 0.07 or more and 0.4 or less are exemplary examples.

In the composition formula (I), n is more preferably 0.0002 or more and particularly preferably 0.0005 or more from the viewpoint of increasing cycle retention rates. In addition, n is preferably 0.15 or less, more preferably 0.13 or less, and particularly preferably 0.1 or less.

The upper limit value and lower limit value of n can be randomly combined together.

n preferably satisfies $0.0002 \leq p < 0.15$.

x, n, and p preferably satisfy $0 \leq m \leq 0.1$, $0.07 \leq p \leq 0.4$, and $0.0002 \leq n \leq 0.15$.

[Method for analyzing composition of CAM or LiMO]

The composition analysis of CAM or LiMO can be measured using an ICP optical emission spectrometer after dissolving the powder of CAM or LiMO in hydrochloric acid.

As the ICP optical emission spectrometer, it is possible to use, for example, SPS3000 manufactured by Seiko Instruments Inc.

[Method for confirming composition of coating]

The composition of the coating can be confirmed using a STEM-EDX element line analysis, inductively coupled plasma emission spectrometry, electron beam microanalyzer analysis, or the like of the cross section of a particle in CAM.

The crystal structure of the coating can be confirmed using powder X-ray diffraction or electron beam diffraction. The inclusion of the element X in the coating can be confirmed by XPS measurement or SEM-EDX measurement.

<LiMO>

LiMO preferably contains at least Li and Ni, preferably contains Li, Ni and the element M, more preferably contains Li, Ni, the element M, and the element X1, and is still more preferably represented by a composition formula (II). The element X1 is one or more elements selected from the group consisting of Al, Ti, Nb, Zr, P, B, Mg, Ba, Si, Sn, and W. Preferable ranges of m, n, and p in the composition formula (II) are the same as those in the composition formula (I).

$$Li[Li_m(Ni_{(1-n-p)}X1_nM_p)_{1-m}]O_2 \cdots \qquad (II)$$

(Here, $-0.1 \leq m \leq 0.2$, $0 < p < 0.6$, and $0 < n \leq 0.2$ are satisfied.)

(Layered structure)

The crystal structure of LiMO is a layered structure and more preferably a hexagonal crystal structure or a monoclinic crystal structure.

The hexagonal crystal structure belongs to any one space group selected from the group consisting of P3, P31, P32, R3, P-3, R-3, P312, P321, P3112, P3121, P3212, P3221, R32, P3m1, P31m, P3c1, P31c, R3m, R3c, P-31m, P-31c, P-3m1, P-3c1, R-3m, R-3c, P6, P61, P65, P62, P64, P63, P-6, P6/m, P63/m, P622, P6122, P6522, P6222, P6422, P6322, P6mm, P6cc, P63cm, P63mc, P-6m2, P-6c2, P-62m, P-62c, P6/mmm, P6/mcc, P63/mcm, and P63/mmc.

In addition, the monoclinic crystal structure belongs to any one space group selected from the group consisting of P2, P21, C2, Pm, Pc, Cm, Cc, P2/m, P21/m, C2/m, P2/c, P21/c, and C2/c.

Among these, in order to obtain a lithium secondary battery having a high discharge capacity, the crystal structure is particularly preferably a hexagonal crystal structure belonging to the space group R-3m or a monoclinic crystal structure belonging to C2/m.

<Coating>

The coating contains the element X. As a compound that configures the coating, an X-Li compound containing the element X and Li and a compound containing the element X, Li, and an oxygen atom are exemplary examples.

The coating has a different composition from LiMO and, for example, preferably has a Ni content of 10 mol% or less and contains no Ni.

The coating may be a coating layer or coated particles. In a case where the coating is present on a part of the surface of LiMO, the coating can be coated particles. In addition, in a case where the coating is present on the entire LiMO, the coating can be a coating layer.

<Method for producing CAM>

In the production of CAM, it is preferable that, first, MCC containing a metal element other than lithium, that is, Ni, and one or more elements selected from the group consisting of the element M and the element X1, which are random metals, is prepared and the MCC and a lithium compound are calcined. The MCC is a metal composite hydroxide containing Ni and one or more elements selected from the group consisting of the element M and the element X1 or a metal composite oxide containing Ni and one or more elements selected from the group consisting of Ni, the element M, and the element X1.

Hereinafter, an example of the method for producing CAM will be divided into an MCC production step, a LiMO production step, and a CAM production step and described.

(MCC production step)

Usually, MCC can be produced by a well-known batch coprecipitation method or continuous coprecipitation method. Hereinafter, a method for producing MCC will be described in detail using a metal composite hydroxide containing Ni, Co, and Al as metals as an example.

First, a nickel salt solution, a cobalt salt solution, an aluminum salt solution, and a complexing agent are reacted with one another by a coprecipitation method, particularly, a continuous method described in JP-A-2002-201028, thereby producing a metal composite hydroxide represented by $Ni_{(1-n-p)}Co_pAl_n(OH)_2$.

A nickel salt that is a solute of the nickel salt solution is not particularly limited, and, for example, at least one of nickel sulfate, nickel nitrate, nickel chloride, and nickel acetate can be used.

As a cobalt salt that is a solute of the cobalt salt solution, for example, at least one of cobalt sulfate, cobalt nitrate, cobalt chloride, and cobalt acetate can be used.

As an aluminum salt that is a solute of the aluminum salt solution, for example, aluminum sulfate, sodium aluminate, or the like can be used.

The above-described metal salts are used in proportions corresponding to the composition ratio of $Ni_{(1-n-p)}Co_pAl_n(OH)_2$. In addition, as the solvent, water is used.

The complexing agent is a compound capable of forming a complex with ions of Ni, Co, and Al in aqueous solutions. Examples thereof include an ammonium ion feeder, hydrazine, ethylenediaminetetraacetic acid, nitrilotriacetic acid, uracil diacetic acid, and glycine. As the ammonium ion feeder, ammonium salts such as ammonium hydroxide, ammonium sulfate, ammonium chloride, ammonium carbonate and ammonium fluoride are exemplary examples.

Regarding the amount of the complexing agent that is contained in the liquid mixture containing the nickel salt solution, the cobalt salt solution, a salt solution of a random metal M, a salt solution of a random metal X1, and the complexing agent, for example, the mole ratio of the complexing agent to the sum of the mole numbers of the metal salts is more than 0 and 2.0 or less.

In the co-precipitation method, in order to adjust the pH value of the liquid mixture containing the nickel salt solution, the salt solution of a random metal, and the complexing agent, an alkaline aqueous solution is added to the liquid mixture before the pH of the liquid mixture turns from alkaline into neutral. As the alkaline aqueous solution, sodium hydroxide or potassium hydroxide can be used.

The value of pH in the present specification is defined as a value measured when the temperature of the liquid mixture is 40°C. The pH of the liquid mixture is measured when the temperature of the liquid mixture sampled from a reaction vessel reaches 40°C.

In a case where the temperature of the sampled liquid mixture is lower than 40°C, the pH is measured when the liquid mixture has been heated to reach 40°C.

In a case where the temperature of the sampled liquid mixture is higher than 40°C, the pH is measured when the liquid mixture has been cooled to reach 40°C.

In addition, at the time of the reaction, the pH value in the reaction vessel is controlled in a range of, for example, 9 or higher and 13 or lower and preferably 11 or higher and 13 or lower.

When the complexing agent in addition to the nickel salt solution, the cobalt salt solution, and the aluminum salt solution is continuously supplied to the reaction vessel, Ni, Co, and Al react with one another, and $Ni_{(1-n-p)}Co_pAl_n(OH)_2$ is generated.

At the time of the reaction, the temperature of the reaction vessel is controlled in a range of, for example, 20°C or higher and 80°C or lower and preferably 30°C or higher and 70°C or lower.

The substances in the reaction vessel are appropriately stirred and mixed together.

As the reaction vessel that is used in the continuous coprecipitation method, it is possible to use a reaction vessel in which the formed reaction precipitate is caused to overflow for separation.

The inside of the reaction vessel may be an inert atmosphere. In the inert atmosphere, it is possible to suppress the aggregation of elements that are more easily oxidized than Ni and to obtain a uniform metal composite hydroxide.

In addition, the inside of the reaction vessel may be in an appropriate oxygen-containing atmosphere or in the presence of an oxidizing agent.

An increase in the amount of the transition metal oxidized increases the specific surface area. As oxygen or the oxidizing agent in the oxygen-containing gas, a sufficient number of oxygen atoms need to be present in order to oxidize the transition metal. As long as a large amount of an oxygen atom is not introduced, an inert atmosphere in the reaction vessel can be held. In a case where the atmosphere in the reaction vessel is controlled with a gas species, a predetermined gas species may be passed into the reaction vessel or a reaction solution may be directly bubbled.

In addition to the control of the above-described conditions, the oxidation state of a reaction precipitate may be controlled by supplying a variety of gases, for example, an inert gas such as nitrogen, argon, or carbon dioxide, an oxidizing gas such as an air or oxygen, or a gas mixture thereof to the reaction vessel.

As a compound that oxidizes the reaction precipitate to be obtained, it is possible to use a peroxide such as hydrogen peroxide, a peroxide salt such as permanganate, perchloric acid, hypochlorous acid, nitric acid, halogen, ozone, or the like.

As a compound that reduces the reaction precipitate to be obtained, it is possible to use an organic acid such as oxalic acid or formic acid, sulfite, hydrazine, or the like.

After the above-described reaction, the obtained reaction precipitate is washed with water and then dried, whereby MCC is obtained. In the present embodiment, a nickel-cobalt-aluminum metal composite hydroxide is obtained as MCC. In addition, in a case where impurities derived from the liquid mixture remain in the reaction precipitate that is washed with only water, the reaction precipitate may be washed with a weak acid water, sodium hydroxide, or an alkaline solution containing sodium hydroxide.

In the above-described example, the nickel-cobalt-aluminum metal composite hydroxide is produced, but a nickel-cobalt-aluminum metal composite oxide may be prepared.

For example, a nickel-cobalt-aluminum metal composite oxide can be prepared by calcining a nickel-cobalt-aluminum metal composite hydroxide. Regarding the calcining time, the total time taken while the temperature begins to be raised and reaches the calcining temperature and the holding of the composite metal hydroxide at the calcining temperature ends is preferably set to 1 hour or longer and 30 hours or shorter. The temperature rising rate in the heating step until the highest holding temperature is reached is preferably 180 °C/hour or faster, more preferably 200 °C/hour or faster, and particularly preferably 250 °C/hour or faster.

The highest holding temperature in the present specification is the highest temperature of the holding temperature of the atmosphere in a calcining furnace in a calcining step and means the calcining temperature in the calcining step. In the case of a main calcining step having a plurality of heating steps, the highest holding temperature means the highest temperature in each heating step.

The temperature rising rate in the present specification is calculated from the time taken while the temperature begins to be raised and reaches the highest holding temperature in a calcining device and a temperature difference between the temperature in the calcining furnace of the calcining device at the time of beginning to raise the temperature and the highest holding temperature.

(LiMO production step)

MCC, that is, the metal composite oxide or the metal composite hydroxide is dried and then mixed with a lithium compound.

The mixture containing the metal composite oxide or the metal composite hydroxide and the lithium compound is calcined, thereby obtaining LiMO.

As the lithium compound, any one or two or more of lithium carbonate, lithium nitrate, lithium acetate, lithium hydroxide, lithium hydroxide hydrate, and lithium oxide can be used or two or more thereof can be mixed together and used.

The drying conditions of the metal composite oxide or the metal composite hydroxide are not particularly limited. The drying condition may be, for example, any of the following conditions 1) to 3).

1) A condition under which the metal composite oxide or the metal composite hydroxide is not oxidized or reduced. Specifically, a drying condition under which a metal composite oxide remains as a metal composite oxide as it is or a drying condition under which a metal composite hydroxide remains as a metal composite hydroxide as it is.
2) A condition under which the metal composite hydroxide is oxidized. Specifically, a drying condition under which a metal composite hydroxide is oxidized to a metal composite oxide.

3) A condition under which the metal composite oxide is reduced. Specifically, a drying condition under which a metal composite oxide is reduced to a metal composite hydroxide.

In order to set the condition under which the precursor is not oxidized or reduced, an inert gas such as nitrogen, helium, or argon may be used as the atmosphere during the drying.

In order to set the condition under which a metal composite hydroxide is oxidized, oxygen or an air may be used as the atmosphere during the drying.

In addition, in order to set the condition under which the metal composite oxide is reduced, a reducing agent such as hydrazine or sodium sulfite may be used in an inert gas atmosphere during the drying.

After being dried, the metal composite oxide or the metal composite hydroxide may be classified as appropriate.

The lithium compound and MCC are used in consideration of the composition ratio of a final target product. For example, in a case where the nickel-cobalt-aluminum metal composite hydroxide is used, the lithium compound and the metal composite hydroxide are used in proportions corresponding to the composition ratio of $LiNi_{(1-n-p)}Co_pAl_nO_2$.

In addition, in a case where lithium is excessive (the mole ratio of Li contained is more than 1) in CAM, which is the final target product, the lithium compound is mixed in a proportion at which the mole ratio of Li that is contained in the lithium compound to the metal element that is contained in MCC becomes a ratio of more than 1.

When the mole ratio between Li contained in the lithium compound and the metal element contained in MCC is controlled, CAM that satisfies the formulas (3) to (6) can be obtained.

The mixture of the nickel cobalt aluminum metal composite hydroxide and the lithium compound is calcined, whereby a lithium-nickel-cobalt-aluminum metal composite oxide is obtained. In the calcining, a dry air, an oxygen atmosphere, an inert atmosphere, or the like is used depending on a desired composition.

The calcining step may be only one time of calcining or may have a plurality of calcining stages.

In a case where the calcining step has a plurality of calcining stages, a step in which the mixture is calcined at the highest temperature is referred to as the main calcining. Prior to the main calcining, a preliminary calcining in which the mixture is calcined at a lower temperature than in the main calcining may be performed. In addition, after the main calcining, a post calcining in which the mixture is calcined at a lower temperature than in the main calcining may be performed.

The calcining temperature (highest holding temperature) in the main calcining is preferably 600°C or higher, more preferably 650°C or higher, and particularly preferably 700°C or higher from the viewpoint of accelerating the growth of the LiMO particles. In addition, from the viewpoint of preventing cracks from being formed in the LiMO particles and maintaining the strength of the LiMO particles, the calcining temperature is preferably 1200°C or lower, more preferably 1100°C or lower, and particularly preferably 1000°C or lower.

The upper limit value and lower limit value of the highest holding temperature in the main calcining can be randomly combined together.

As the combination, 600°C or higher and 1200°C or lower, 650°C or higher and 1100°C or lower, and 700°C or higher and 1000°C or lower are exemplary examples.

In the present embodiment, CAM that satisfies the formulas (3) to (6) can be obtained by controlling the calcining temperature within the above-described range.

The calcining temperature in the preliminary calcining or the post calcining may be lower than the calcining temperature in the main calcining, and, for example, a range of 350°C or higher and 800°C or lower is an exemplary example.

The holding temperature in the calcining may be appropriately adjusted depending on the composition of a transition metal element that is used.

In addition, as the time during which the mixture is held at the holding temperature, 0.1 hour or longer and 20 hours or shorter is an exemplary example, and 0.5 hours or longer and 10 hours or shorter is preferable. The temperature rising rate up to the holding temperature is usually 50 °C/hour or faster and 400 °C/hour or slower, and the temperature lowering rate from the holding temperature to room temperature is usually 10 °C/hour or faster and 400 °C/hour or slower. In addition, as the atmosphere for the calcining, it is possible to use the atmosphere, oxygen, nitrogen, argon or a gas mixture thereof.

[Random step]

· Washing step

Calcined LiMO is preferably washed with pure water or a washing liquid such as an alkaline washing liquid.

As the alkaline washing liquid, for example, aqueous solutions of one or more anhydrides selected from the group consisting of LiOH (lithium hydroxide), NaOH (sodium hydroxide), KOH (potassium hydroxide), $Li_2CO_3$ (lithium carbonate), $Na_2CO_3$ (sodium carbonate), $K_2CO_3$ (potassium carbonate), and $(NH_4)_2CO_3$ (ammonium carbonate) and

aqueous solutions of a hydrate of the above-described anhydride are exemplary examples. In addition, as an alkali, it is also possible to use ammonia.

As a method for bringing the washing liquid and LiMO into contact with each other in the washing step, a method in which the LiMO powder is injected into each washing liquid and stirred or a method in which each washing liquid is applied as shower water to the LiMO powder and the like are exemplary examples. As a method for applying each washing liquid to the LiMO powder as shower water, a method in which LiMO is injected into the washing liquid and stirred, then, LiMO is separated from each washing liquid, and then each washing liquid is applied to separated LiMO as a shower water is an exemplary example.

The temperature of the washing liquid that is used for the washing is preferably 15°C or lower, more preferably 10°C or lower, and still more preferably 8°C or lower. When the temperature of the washing liquid is controlled to a temperature at which the washing liquid does not freeze within the above-described range, it is possible to suppress the excessive elution of lithium ions from the crystal structure of LiMO into the washing liquid during the washing.

Washed LiMO may be dried as appropriate.

LiMO is obtained through the above steps.

(CAM production step)

A coating is formed on the surface of LiMO to produce CAM.

Specifically, a coating containing the element X is formed on the surfaces of the particles of LiMO.

In the present embodiment, LiMO and an additive raw material are preferably mixed in a liquid system in the presence of lithium alkoxide. Specifically, it is preferable to bring LiMO and an additive raw material solution into contact with each other to form a coating on the surface of LiMO. This operation makes it possible to produce CAM that satisfies the formula (1) and the formula (2).

As the additive raw material, a mixture of a metal alkoxide of the element X and lithium alkoxide is preferably used.

As the additive raw material solution, a liquid mixture of the metal alkoxide of the element X, lithium alkoxide, and a non-aqueous solvent is preferable.

When a mixture of the metal alkoxide of the element X and the lithium alkoxide is used as the additive raw material solution, it is possible to appropriately form a coating on the surface of LiMO and produce CAM that satisfies the formula (1) and the formula (2).

As the amount of the metal alkoxide of the element X added increases, the values of $X_{at}/Li_{at}$ and $\sigma X$ of CAM are likely to increase.

As the metal alkoxide of the element X, for example, aluminum ethoxide, aluminum isopropoxide, aluminum butoxide, aluminum acetylacetonate, titanium isopropoxide, titanium tetrabutoxide, zirconium ethoxide, zirconium propoxide, zirconium butoxide, niobium ethoxide, tungsten ethoxide, triethyl phosphite, triisobutoxyborane, magnesium ethoxide, barium ethoxide, tin butoxide, tetraethoxysilane, and the like are exemplary examples.

As the lithium alkoxide, for example, lithium ethoxide, lithium methoxide, lithium butoxide, and the like are exemplary examples.

In the case of using lithium alkoxide, there are cases where a part of the added lithium alkoxide does not react with the metal alkoxide, but reacts with LiMO, thereby contributing to the growth of the crystal structure of LiMO. Therefore, it becomes easy to obtain CAM that satisfies the formulas (3) to (6).

The mole ratio between the metal alkoxide of the element X and the lithium alkoxide is preferably 1:0.3 or more and 1:4.0 or less.

The non-aqueous solvent is preferably a solvent that dissolves the metal alkoxide containing the element X, does not contain water, and can be removed by drying. Specifically, low-boiling-point non-aqueous solvents such as ethanol, propanol, diethyl ether, diisopropyl ether, acetone, and acetonitrile are preferable, dehydrated solvents are more preferable, and anhydrous ethanol is particularly preferable.

The additive raw material solution is preferably mixed in proportions at which the mole ratio (X/(Ni + M + X1)) of the element X in the additive raw material solution to the sum of Ni, the element M, and the element X1 in LiMO becomes 0.05 mol% or more and 5.0 mol% or less.

As a method for bringing LiMO and the additive raw material solution into contact with each other, the following method is an exemplary example.

· A method in which LiMO is immersed in the additive raw material solution. Here, "immersing" includes the injection of LiMO into the additive raw material solution or injection and then stirring.

· A method in which the additive raw material solution is applied as a shower liquid to LiMO.

· A method in which the additive raw material solution is sprayed as a spray liquid to LiMO.

· A method in which LiMO is immersed in the additive raw material solution, then, LiMO is separated from the additive raw material solution, next, the additive raw material solution is applied as a shower liquid to separated LiMO and brought into contact with LiMO.

A mixture of LiMO and the additive raw material solution is obtained by bringing LiMO and the additive raw material solution into contact with each other.

In the present embodiment, it is preferable to dry the obtained mixture to remove the solvent of the additive raw material solution.

A drying method is not particularly limited as long as the solvent can be removed and may be any of drying by heating, drying by blowing an air, and drying under reduced pressure.

After dried, the mixture is preferably thermally treated.

In the case of performing the thermal treatment, the thermal treatment conditions are appropriately adjusted depending on the kind of the additive raw material. As the thermal treatment conditions, the thermal treatment temperature and the holding time of the thermal treatment are exemplary examples.

As the thermal treatment temperature, for example, a temperature range of 400°C or higher and 700°C or lower is an exemplary example.

As the thermal treatment time, for example, 4 hours or longer and 10 hours or shorter is an exemplary example.

When the thermal treatment is performed, a coating is formed on the surface of LiMO. Therefore, CAM is obtained.

CAM is appropriately crushed and classified.

<Lithium secondary battery>

Next, a positive electrode for a lithium secondary battery for which CAM that is produced by the present embodiment is used (hereinafter, referred to as the positive electrode in some cases) and a lithium secondary battery having this positive electrode will be described while describing the configuration of the lithium secondary battery.

An example of the lithium secondary battery of the present embodiment has a positive electrode, a negative electrode, a separator interposed between the positive electrode and the negative electrode, and an electrolyte solution disposed between the positive electrode and the negative electrode.

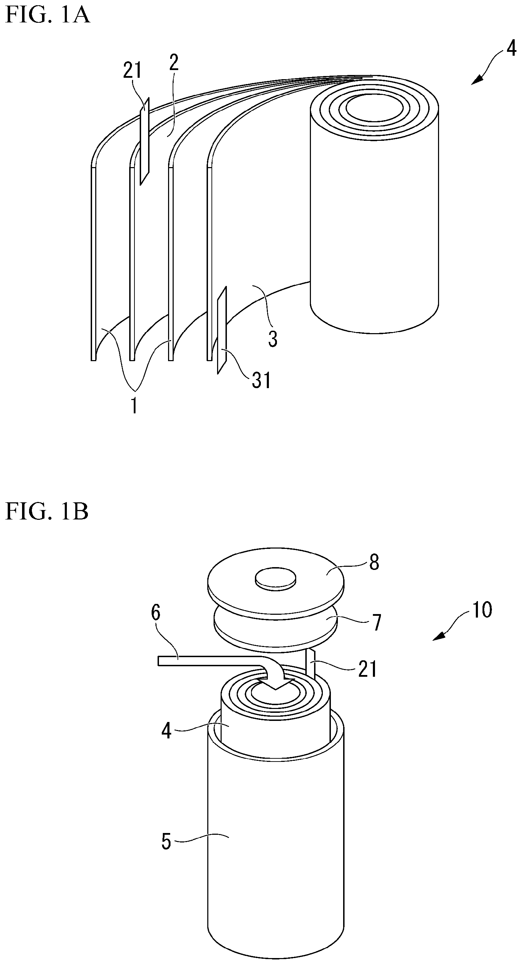

FIG. 1A and FIG. 1B are schematic views illustrating an example of the lithium secondary battery of the present embodiment. A cylindrical lithium secondary battery 10 of the present embodiment is produced as described below.

First, as illustrated in FIG. 1A, a pair of separators 1 having a strip shape, a strip-shaped positive electrode 2 having a positive electrode lead 21 at one end, and a strip-shaped negative electrode 3 having a negative electrode lead 31 at one end are laminated in order of the separator 1, the positive electrode 2, the separator 1, and the negative electrode 3 and are wound to form an electrode group 4.

Next, as shown in FIG. 1B, the electrode group 4 and an insulator, not shown, are accommodated in a battery can 5, and then the can bottom is sealed. The electrode group 4 is impregnated with an electrolyte solution 6, and an electrolyte is disposed between the positive electrode 2 and the negative electrode 3. Furthermore, the upper portion of the battery can 5 is sealed with a top insulator 7 and a sealing body 8, whereby the lithium secondary battery 10 can be produced.

As the shape of the electrode group 4, a columnar shape in which the cross-sectional shape becomes a circle, an ellipse, a rectangle, or a rectangle with rounded corners when the electrode group 4 is cut in a direction perpendicular to the winding axis is an exemplary example.

In addition, as the shape of a lithium secondary battery having such an electrode group 4, a shape that is specified by IEC60086, which is a standard for batteries specified by the International Electrotechnical Commission (IEC) or by JIS C 8500 can be adopted. Shapes such as a cylindrical shape and a square shape can be exemplary examples.

Furthermore, the lithium secondary battery is not limited to the winding-type configuration and may have a lamination-type configuration in which the laminated structure of the positive electrode, the separator, the negative electrode, and the separator is repeatedly overlaid. As the laminate-type lithium secondary battery, a so-called coin-type battery, button-type battery, or paper-type (or sheet-type) battery can be an exemplary example.

Hereinafter, each configuration will be described in order.

(Positive electrode)

A positive electrode of the present embodiment can be produced by first adjusting a positive electrode mixture containing CAM, a conductive material, and a binder, and causing a positive electrode current collector to support the positive electrode mixture.

(Conductive material)

As the conductive material in the positive electrode of the present embodiment, a carbon material can be used. As the carbon material, graphite powder, carbon black (for example, acetylene black), a fibrous carbon material, and the like can be exemplary examples.

The proportion of the conductive material in the positive electrode mixture is preferably 5 parts by mass or more and 20 parts by mass or less with respect to 100 parts by mass of CAM. In the case of using a fibrous carbon material such as a graphitized carbon fiber or a carbon nanotube as the conductive material, it is also possible to decrease the proportion.

(Binder)

As the binder in the positive electrode, a thermoplastic resin can be used. As the thermoplastic resin, polyimide resins; fluororesins such as polyvinylidene fluoride (hereinafter, referred to as PVdF in some cases) and polytetrafluoroethylene; polyolefin resins such as polyethylene and polypropylene, and the resins described in WO 2019/098384A1 or US2020/0274158A1 can be exemplary examples.

Two or more of these thermoplastic resins may be used in a mixture form. When a fluororesin and a polyolefin resin are used as the binder, the proportion of the fluororesin to the entire positive electrode mixture is set to 1 mass% or more and 10 mass% or less, and the proportion of the polyolefin resin is set to 0.1 mass% or more and 2 mass% or less, whereby it is possible to obtain a positive electrode mixture having both a high adhesive force to the positive electrode current collector and a high bonding force inside the positive electrode mixture.

(Positive electrode current collector)

As the positive electrode current collector in the positive electrode, a strip-shaped member formed of a metal material such as Al, Ni, or stainless steel as a forming material can be used. Particularly, a positive electrode current collector that is formed of Al and has a thin film shape is preferable since the positive electrode current collector is easy to process and inexpensive.

As the method for supporting the positive electrode mixture by the positive electrode current collector, a method in which the positive electrode mixture is formed by pressurization on the positive electrode current collector is an exemplary example. In addition, the positive electrode mixture may be supported by the positive electrode current collector by preparing a paste of the positive electrode mixture using an organic solvent, applying and drying the paste of the positive electrode mixture to be obtained on at least one surface side of the positive electrode current collector, and fixing the positive electrode mixture by pressing.

As the organic solvent that can be used in the case of preparing the paste of the positive electrode mixture, an amine-based solvent such as N,N-dimethylaminopropylamine or diethylenetriamine; an ether-based solvent such as tetrahydrofuran; a ketone-based solvent such as methyl ethyl ketone; an ester-based solvent such as methyl acetate; and an amide-based solvent such as dimethylacetamide or N-methyl-2-pyrrolidone (hereinafter, referred to as NMP in some cases) are exemplary examples.

As the method for applying the paste of the positive electrode mixture to the positive electrode current collector, a slit die coating method, a screen coating method, a curtain coating method, a knife coating method, a gravure coating method, and an electrostatic spraying method are exemplary examples.

The positive electrode can be produced by the method exemplified above.

(Negative electrode)

The negative electrode in the lithium secondary battery needs to be a material which can be doped with lithium ions and from which lithium ions can be de-doped at a potential lower than that of the positive electrode, and an electrode in which a negative electrode mixture containing a negative electrode active material is supported by a negative electrode current collector and an electrode formed of a negative electrode active material alone are exemplary examples.

(Negative electrode active material)

As the negative electrode active material in the negative electrode, materials which are a carbon material, a chalcogen compound (oxide, sulfide, or the like), a nitride, a metal, or an alloy and can be doped with lithium ions and from which lithium ions can be de-doped at a lower potential than the positive electrode are exemplary examples.

As the carbon material that can be used as the negative electrode active material, graphite such as natural graphite and artificial graphite, cokes, carbon black, pyrolytic carbons, a carbon fiber, and a calcined product of an organic polymer compound-calcined body can be exemplary examples.

As oxides that can be used as the negative electrode active material, oxides of silicon represented by a formula $SiO_x$ (here, x is a positive real number) such as $SiO_2$ and $SiO$ oxides of tin represented by a formula $SnO_x$ (here, x is a positive real number) such as $SnO_2$ and $SnO$; and metal composite oxides containing lithium and titanium such as $Li_4Ti_5O_{12}$ and $LiVO_2$ can be exemplary examples.

In addition, as the metal that can be used as the negative electrode active material, lithium metal, silicon metal, tin metal, and the like can be exemplary examples.

As a material that can be used as the negative electrode active material, the materials described in WO 2019/098384A1 or US2020/0274158A1 may be used.

These metals and alloys can be used as an electrode, mainly, singly after being processed into, for example, a foil shape.

Among the above-described negative electrode active materials, the carbon material containing graphite such as natural graphite or artificial graphite as a main component is preferably used for the reason that the potential of the negative electrode rarely changes (the potential flatness is favorable) from a uncharged state to a fully-charged state during charging, the average discharging potential is low, the capacity retention rate at the time of repeatedly charging and discharging the lithium secondary battery is high (the cycle characteristics are favorable), and the like. The shape of the carbon material may be, for example, any of a flaky shape such as natural graphite, a spherical shape such as mesocarbon microbeads, a fibrous shape such as a graphitized carbon fiber, or an aggregate of fine powder.

The negative electrode mixture may contain a binder as necessary. As the binder, thermoplastic resins can be exemplary examples, and specifically, PVdF, thermoplastic polyimide, carboxymethylcellulose (hereinafter, referred to as CMC in some cases), styrene-butadiene rubber (hereinafter, referred to as SBR in some cases), polyethylene, and polypropylene can be exemplary examples.

(Negative electrode current collector)

As the negative electrode current collector in the negative electrode, a strip-shaped member formed of a metal material such as Cu, Ni, or stainless steel as the forming material can be an exemplary example. Particularly, a negative electrode current collector that is formed of Cu and has a thin film shape is preferable since the negative electrode current collector does not easily produce an alloy with lithium and is easy to process.

As the method for supporting the negative electrode mixture by the negative electrode current collector, similarly to the case of the positive electrode, a method in which the negative electrode mixture is formed by pressurization and a method in which a paste of the negative electrode mixture is prepared using a solvent or the like, applied and dried on the negative electrode current collector, and then the negative electrode mixture is compressed by pressing are exemplary examples.

(Separator)

As the separator in the lithium secondary battery, it is possible to use, for example, a material that is made of a material such as a polyolefin resin such as polyethylene or polypropylene, a fluororesin, or a nitrogen-containing aromatic polymer and has a form such as a porous film, a non-woven fabric, or a woven fabric. In addition, the separator may be formed using two or more of these materials or the separator may be formed by laminating these materials. In addition, the separators described in JP-A-2000-030686 or US20090111025A1 may be used.

The air resistance of the separator by the Gurley method specified by JIS P 8117 is preferably 50 sec/100 cc or more and 300 sec/100 cc or less and more preferably 50 sec/100 cc or more and 200 sec/100 cc or less in order to favorably transmit the electrolyte while the battery is in use (while the battery is being charged and discharged).

In addition, the porosity of the separator is preferably 30 vol% or more and 80 vol% or less and more preferably 40 vol% or more and 70 vol% or less. The separator may be a laminate of separators having different porosities.

(Electrolyte solution)

The electrolyte solution in the lithium secondary battery contains an electrolyte and an organic solvent.

As the electrolyte that is contained in the electrolyte solution, lithium salts such as $LiClO_4$, $LiPF_6$, and $LiBF_4$ are exemplary examples, and a mixture of two or more thereof may be used. In addition, the electrolytes described in WO 2019/098384A1 or US2020/0274158A1 may be used. Among these, as the electrolyte, at least one selected from the group consisting of $LiPF_6$, $LiAsF_6$, $LiSbF_6$, $LiBF_4$, $LiCF_3SO_3$, $LiN(SO_2CF_3)_2$, and $LiC(SO_2CF_3)_3$, which contain fluorine, is preferably used.

As the organic solvent that is contained in the electrolyte solution, for example, propylene carbonate, ethylene carbonate, dimethyl carbonate, diethyl carbonate, ethyl methyl carbonate, and the organic solvents described in WO 2019/098384A1 or US2020/0274158A1 can be used.

As the organic solvent, two or more of these are preferably mixed and used, and a solvent mixture of a cyclic carbonate and a non-cyclic carbonate and a solvent mixture of a cyclic carbonate and ethers are more preferable. As the solvent mixture of a cyclic carbonate and a non-cyclic carbonate, a solvent mixture containing ethylene carbonate, dimethyl carbonate, and ethyl methyl carbonate is preferable.

In addition, as the electrolyte solution, it is preferable to use an electrolyte solution containing a lithium salt containing fluorine such as $LiPF_6$ and an organic solvent having a fluorine substituent since the safety of lithium secondary batteries to be obtained is enhanced.

<All-solid-state lithium secondary battery>

Next, a positive electrode for which CAM that is produced by the present embodiment is used as a positive electrode active material for an all-solid-state lithium secondary battery and an all-solid-state lithium secondary battery having this positive electrode will be described while describing the configuration of the all-solid-state lithium secondary battery.

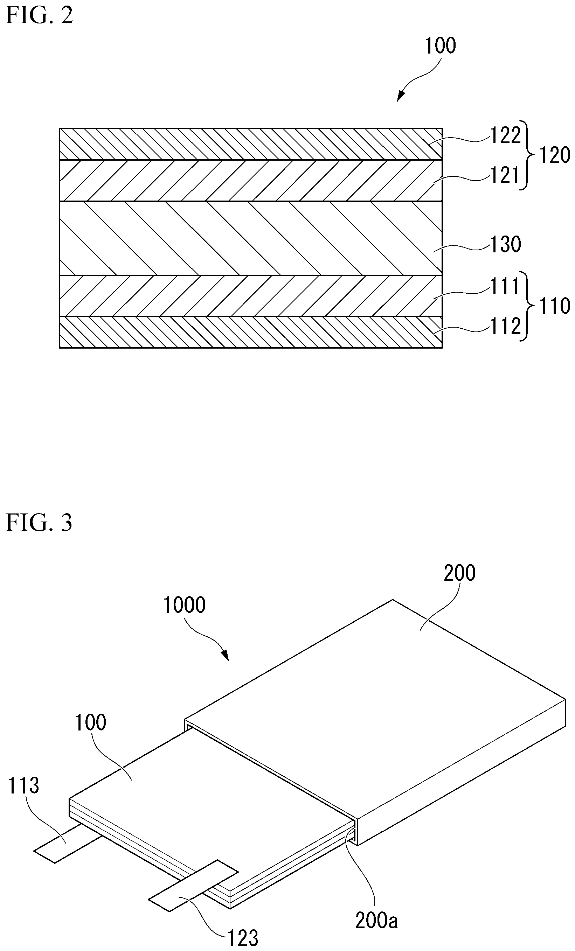

FIG. 2 and FIG. 3 are schematic views showing an example of the all-solid-state lithium secondary battery. FIG. 2 is a schematic view showing a laminate that an all-solid-state lithium-ion secondary battery includes. FIG. 3 is a schematic view showing an entire configuration of the all-solid-state lithium secondary battery.

An all-solid-state lithium secondary battery 1000 has a laminate 100 having a positive electrode 110, a negative electrode 120, and a solid electrolyte layer 130 and an exterior body 200 accommodating the laminate 100.

In addition, the all-solid-state lithium secondary battery 1000 may have a bipolar structure in which a positive electrode active material and a negative electrode active material are disposed on both sides of a current collector. As specific examples of the bipolar structure, for example, the structures described in JP-A-2004-95400 are exemplary examples.

A material that configures each member will be described below.

The laminate 100 may have an external terminal 113 that is connected to a positive electrode current collector 112 and an external terminal 123 that is connected to a negative electrode current collector 122.

In the laminate 100, the positive electrode 110 and the negative electrode 120 interpose the solid electrolyte layer 130 so as not to short-circuit each other. In addition, the all-solid-state lithium secondary battery 1000 may have a separator, which has been used in conventional liquid-based lithium secondary batteries, between the positive electrode 110 and the negative electrode 120 to prevent a short circuit between the positive electrode 110 and the negative electrode 120.

The all-solid-state lithium secondary battery 1000 has an insulator, not shown, that insulates the laminate 100 and the exterior body 200 from each other or a sealant, not shown, that seals an opening portion 200a of the exterior body 200.

As the exterior body 200, a container formed of a highly corrosion-resistant metal material such as aluminum, stainless steel or nickel-plated steel can be used. In addition, a container obtained by processing a laminate film having at least one surface on which a corrosion resistant process has been performed into a bag shape can also be used.

As the shape of the all-solid-state lithium secondary battery 1000, for example, shapes such as a coin type, a button type, a paper type (or a sheet type), a cylindrical type, and a square type can be exemplary examples.

The all-solid-state lithium secondary battery 1000 is shown in the drawings to have one laminate 100, but is not limited thereto. The all-solid-state lithium secondary battery 1000 may have a configuration in which the laminate 100 is used as a unit cell and a plurality of unit cells (laminates 100) is sealed inside the exterior body 200.

Hereinafter, each configuration will be described in order.

(Positive electrode)

The positive electrode 110 has a positive electrode active material layer 111 and a positive electrode current collector 112.

The positive electrode active material layer 111 contains the positive electrode active material for a lithium secondary battery, which is one aspect of the present invention described above. In addition, the positive electrode active material layer 111 may contain a solid electrolyte (second solid electrolyte), a conductive material, and a binder.

The positive electrode active material contained in the positive electrode active material layer 111 is in contact with the second solid electrolyte contained in the positive electrode active material layer 111. Specifically, the positive electrode active material layer 111 contains a plurality of particles containing lithium metal composite oxide crystals (positive electrode active material) and a solid electrolyte loaded between the plurality of particles (positive electrode active material) and in contact with the particles (positive electrode active material).

(Solid electrolyte)

As the solid electrolyte that the positive electrode active material layer 111 may have, a solid electrolyte that has lithium ion conductivity and used in well-known all-solid-state batteries can be adopted. As the solid electrolyte, an inorganic electrolyte and an organic electrolyte can be exemplary examples. As the inorganic electrolyte, an oxide-based solid electrolyte, a sulfide-based solid electrolyte, and a hydride-based solid electrolyte can be exemplary examples. As the organic electrolyte, polymer-based solid electrolytes are exemplary examples.

As each electrolyte, the compounds described in WO 2020/208872A1, US2016/0233510A1, US2012/0251871A1, and US2018/0159169A1 are exemplary examples, and examples thereof include the following compounds.

An oxide-based solid electrolyte or a sulfide-based solid electrolyte is preferably used, and an oxide-based solid electrolyte is more preferably used.

(Oxide-based solid electrolyte)

As the oxide-based solid electrolyte, for example, a perovskite-type oxides, a NASICON-type oxide, a LISICON-type oxide, a garnet-type oxides, and the like are exemplary examples.

Specific examples of each oxide include the compounds described in WO 2020/208872A1, US2016/0233510A1, and US2020/0259213A1.

As the garnet-type oxide, Li-La-Zr-based oxides such as $Li_7La_3Zr_2O_{12}$ (LLZ) are exemplary examples.

The oxide-based solid electrolyte may be a crystalline material or an amorphous (amorphous) material. As the amorphous (amorphous) solid electrolyte, for example, Li-B-O compounds such as $Li_3BO_3$, $Li_2B_4O_7$, and $LiBO_2$ are exemplary examples. The oxide-based solid electrolyte preferably contains an amorphous material.

(Sulfide-based solid electrolyte)

As the sulfide-based solid electrolyte, $Li_2S$-$P_2S_5$-based compounds, $Li_2S$-$SiS_2$-based compounds, $Li_2S$-$GeS_2$-based compounds, $Li_2S$-$B_2S_3$-based compounds, $LiI$-$Si_2S$-$P_2S_5$-based compounds, $LiI$-$Li_2S$-$P_2O_5$-based compounds, $LiI$-$Li_3PO_4$-$P_2S_5$-based compounds, $Li_{10}GeP_2S_{12}$, and the like can be exemplary examples.

In the present specification, the expression "-based compound" that indicates the sulfide-based solid electrolyte is used as a general term for solid electrolytes mainly containing a raw material written before "-based compound" such as "$Li_2S$" or "$P_2S_5$". For example, the $Li_2S$-$P_2S_5$-based compounds include solid electrolytes containing $Li_2S$ and $P_2S_5$ and further containing a different raw material. In addition, the $Li_2S$-$P_2S_5$-based compounds also include solid electrolytes containing $Li_2S$ and $P_2S_5$ in different mixing ratios.

As the $Li_2S$-$P_2S_5$-based compounds, $Li_2S$-$P_2S_5$, $Li_2S$-$P_2S_5$-$LiI$, $Li_2S$-$P_2S_5$-$LiCl$, $Li_2S$-$P_2S_5$-$LiBr$, $Li_2S$-$P_2S_5$-$LiI$-$LiBr$, and the like can be exemplary examples.

As the $Li_2S$-$SiS_2$-based compounds, $Li_2S$-$SiS_2$, $Li_2S$-$SiS_2$-$LiI$, $Li_2S$-$SiS_2$-$LiBr$, $Li_2S$-$SiS_2$-$LiCl$, $Li_2S$-$SiS_2$-$B_2S_3$-$LiI$, $Li_2S$-$SiS_2$-$P_2S_5$-$LiI$, $Li_2S$-$SiS_2$-$P_2S_5$-$LiCl$, and the like are exemplary examples.

As the $Li_2S$-$GeS_2$-based compounds, $Li_2S$-$GeS_2$, $Li_2S$-$GeS_2$-$P_2S_5$, and the like are exemplary examples.

The sulfide-based solid electrolyte may be a crystalline material or an amorphous (amorphous) material.

Two or more solid electrolytes can be jointly used as long as the effect of the invention is not impaired.

(Conductive material and binder)

As the conductive material that the positive electrode active material layer 111 may have, the materials described in the above-described (conductive material) can be used. In addition, as for the proportion of the conductive material in the positive electrode mixture, the proportions described in the above-described (conductive material) can be applied in the same manner. In addition, as the binder that the positive electrode has, the materials described in the above-described (binder) can be used.

(Positive electrode current collector)

As the positive electrode current collector 112 that the positive electrode 110 of the present embodiment has, the materials described in the above-described (positive electrode current collector) can be used.

As a method for supporting the positive electrode active material layer 111 by the positive electrode current collector 112, a method in which the positive electrode active material layer 111 is formed by pressurization on the positive electrode current collector 112 is an exemplary example. A cold press or a hot press can be used for the pressurization.

In addition, the positive electrode active material layer 111 may be supported by the positive electrode current collector 112 by preparing a paste of a mixture of the positive electrode active material, the solid electrolyte, the conductive material, and the binder using an organic solvent to produce a positive electrode mixture, applying and drying the positive electrode mixture to be obtained on at least one surface side of the positive electrode current collector 112, and fixing the positive electrode mixture by pressing.

In addition, the positive electrode active material layer 111 may be supported by the positive electrode current collector 112 by preparing a paste of a mixture of the positive electrode active material, the solid electrolyte, and the conductive material using an organic solvent to produce a positive electrode mixture, applying and drying the positive electrode mixture to be obtained on at least one surface side of the positive electrode current collector 112, and sintering the positive electrode mixture.

As the organic solvent that can be used for the positive electrode mixture, the same organic solvent as the organic solvent that can be used in the case of preparing the paste of the positive electrode mixture described in the above-described (positive electrode current collector) can be used.

As a method for applying the positive electrode mixture to the positive electrode current collector 112, for example, a slit die coating method, a screen coating method, a curtain coating method, a knife coating method, a gravure coating method, and an electrostatic spraying method are exemplary examples.

The positive electrode 110 can be produced by the method exemplified above.

(Negative electrode)

The negative electrode 120 has a negative electrode active material layer 121 and the negative electrode current collector 122. The negative electrode active material layer 121 contains a negative electrode active material. In addition, the negative electrode active material layer 121 may contain a solid electrolyte and a conductive material. As the negative electrode active material, the negative electrode current collector, the solid electrolyte, the conductive material, and a binder, those described above can be used.

(Solid electrolyte layer)

The solid electrolyte layer 130 has the above-described solid electrolyte.

The solid electrolyte layer 130 can be formed by depositing a solid electrolyte of an inorganic substance on the surface of the positive electrode active material layer 111 in the above-described positive electrode 110 by a sputtering method.

In addition, the solid electrolyte layer 130 can be formed by applying and drying a paste-form mixture containing a solid electrolyte on the surface of the positive electrode active material layer 111 in the above-described positive electrode 110. The solid electrolyte layer 130 may be formed by pressing the dried paste-form mixture and further pressurizing the paste-form mixture by a cold isostatic pressure method (CIP).

The laminate 100 can be produced by laminating the negative electrode 120 on the solid electrolyte layer 130 provided on the positive electrode 110 as described above using a well-known method in an aspect that the negative electrode electrolyte layer 121 comes into contact with the surface of the solid electrolyte layer 130.

According to the positive electrode active material for an all-solid-state lithium battery having the above-described configuration, it is possible to smoothly exchange lithium ions between the positive electrode and the solid electrolyte and to improve the battery performance.

According to the electrode having the above-described configuration, since the all-solid-state lithium battery has the positive electrode active material for an all-solid-state lithium battery, it is possible to improve the battery performance of the all-solid-state lithium-ion battery.

[Examples]

Next, the present invention will be described in more detail using examples.

<Composition analysis>

The composition analysis of CAM or LiMO that was produced by a method to be described below was performed by the method described in the section [Method for analyzing composition of CAM or LiMO].

In addition, the element X contained in the coating in CAM was confirmed by the method described in the section [Method for confirming composition of coating].

<Formula (1)>

(Method for measuring $X_{at}$ and $Li_{at}$)

$X_{at}$ was measured by the method described in the section [Method for measuring Xat].

$Li_{at}$ was measured by the method described in the section [Method for measuring $Li_{at}$].

$X_{at}/Li_{at}$, which is the ratio of $X_{at}$ and $Li_{at}$ obtained by the above-described methods, was calculated.

<Formula (2)>

<<Method for measuring $\sigma X$>>

$\sigma X$ was measured by the method described in the section [Method for measuring $\sigma X$].

<X-ray diffraction measurement using CuKa rays>

A powder X-ray diffraction pattern was obtained by the method described in the section [X-ray diffraction measurement using CuKa rays].

<Analysis of X-ray diffraction pattern>

A predetermined peak was analyzed from the obtained powder X-ray diffraction pattern by the method described in the section [Analysis of X-ray diffraction pattern]. Peak detection was performed under conditions of a threshold of 3.00 and a peak intensity % cutoff of 0.25.

<Confirmation of peak>

From the obtained powder X-ray diffraction pattern, the presence or absence of a peak between the diffraction peak at the highest angle present within a range of $2\theta = 38.5 \pm 1°$ and the diffraction peak present within a range of $2\theta = 44.5 \pm 1°$ was confirmed. Here, the fact that there was no diffraction peak with a relative integrated intensity of 3.0% or more with respect to the maximum integrated intensity within a range of $2\theta = 10°$ to $90°$ (the total of the integrated intensities of the peaks present within the range of $2\theta = 10°$ to $90°$) was regarded as "no diffraction peak is present (a diffraction peak is absent)".

<Formula (3) and Formula (4)>

From the obtained powder X-ray diffraction pattern, between two diffraction peaks that were present in a range of $2\theta = 38.5 \pm 1°$ and had the highest peak intensity and the second highest peak intensity, the diffraction peak on the low angle side was defined as a peak A, and the diffraction peak on the high angle side was defined as a peak B.

The ratio $L_A/L_B$ of $L_A$, which was the crystallite size from the peak A, and $L_B$, which was the crystallite size obtained from the peak B, was calculated. $L_A$ and $L_B$ were each obtained from the half widths of the peak A and the peak B using the Scherrer formula $L = K\lambda/\beta\cos\theta$ (L: crystallite size, K: Scherrer constant, $\beta$: peak half width).

Furthermore, the ratio $I_A/I_B$ of $I_A$, which was the integrated intensity of the peak A, and $I_B$, which was the integrated intensity of the peak B, was calculated.

<Formula (5) and Formula (6)>

From the obtained powder X-ray diffraction pattern, the diffraction peak present within a range of $2\theta = 18.5 \pm 1°$ was defined as a peak C, and the diffraction peak present within a range of $2\theta = 44.5 \pm 1°$ was defined as a peak D. $L_C/L_D$ that represent the ratio of $L_C$, which was the crystallite size obtained from the peak C, and $L_D$, which was the crystallite size obtained from the peak D, was calculated. $L_C$ and $L_D$ were each obtained from the half widths of the peak C and the peak D using the Scherrer formula $L = K\lambda/\beta\cos\theta$ (L: crystallite size, K: Scherrer constant, $\beta$: peak half width).

Furthermore, $I_C/I_D$ that represents the ratio of $I_C$, which was the integrated intensity of the peak C, and $I_D$, which was the integrated intensity of the peak D, was calculated.

A positive electrode for a lithium secondary battery was produced by the method described in the section [Production of positive electrode for lithium secondary battery] using CAM obtained by a production method to be described below.

A lithium secondary battery was produced by the method described in the section [Production of lithium secondary battery (coin-type half cell)] using the produced positive electrode for a lithium secondary battery.

The initial discharge capacity was measured by the method described in the section [Charge and discharge evaluation: initial discharge capacity] using the produced lithium secondary battery.

The cycle retention rate was measured by the method described in the section [Charge and discharge evaluation: cycle retention rate] using the produced lithium secondary battery.

<<Example 1>>

1. Production of CAM 1

After water was poured into a reaction vessel equipped with a stirrer and an overflow pipe, an aqueous solution of sodium hydroxide was added thereto, and the liquid temperature was held at 50°C.

A nickel sulfate aqueous solution, a cobalt sulfate aqueous solution, and an aluminum sulfate aqueous solution were mixed together in proportions at which the atomic ratio of Ni, Co, and Al reached 88:8:4, thereby preparing a raw material-mixed liquid.

Next, the raw material-mixed liquid and an ammonium sulfate aqueous solution, as a complexing agent, were continuously added into the reaction vessel under stirring. A sodium hydroxide aqueous solution was timely added dropwise under a condition where the pH of the solution in the reaction vessel reached 11.6 (when measured at a liquid temperature of 40°C), and the particles of nickel-cobalt-aluminum composite hydroxide were obtained.

The nickel-cobalt-aluminum composite hydroxide particles were washed, then, dehydrated with a centrifuge, isolated, and dried at 105°C, thereby obtaining a nickel-cobalt-aluminum composite hydroxide 1.

The nickel-cobalt-aluminum composite hydroxide 1 and a lithium hydroxide monohydrate powder were weighed and mixed in proportions at which the mole ratio reached Li/(Ni + Co + Al) reached 1.10.

After that, the mixture was preliminarily calcined at 650°C for 5 hours in an oxygen atmosphere.

After that, the mixture was mainly calcined at 720°C for 6 hours in an oxygen atmosphere.

After that, the mixture was washed with water and dried at 250°C for 10 hours in a nitrogen atmosphere. Therefore, the powder of LiMO 1 was obtained.

As a result of the composition analysis of LiMO 1, it was found that, in the composition formula (II), m = 0.040, n = 0.023, p = 0.088, the element M was Co, and the element X1 was Al.

The obtained LiMO 1 and an additive raw material solution 1, which was an additive raw material, were mixed in proportions at which the mole ratio (Al/(Ni + Co + Al)) of Al in the additive raw material solution 1 in the sum of the mole ratio of Ni, Co, and Al in LiMO 1 and the mole ratio of Al in the additive raw material solution 1 became 0.15 mol%, thereby obtaining a mixture 1.

As the additive raw material solution 1, a mixed solution of aluminum isopropoxide, lithium ethoxide, and anhydrous ethanol was used. The mole ratio of aluminum isopropoxide and lithium ethoxide was adjusted under a condition where the mole ratio became 1:1.

The mixture 1 was dried at room temperature for 2 hours and further dried in a vacuum at 120°C for 12 hours.

After that, a thermal treatment was performed at 400°C for 5 hours in an oxygen atmosphere to obtain CAM 1 including a coating containing Al on the surface.

2. Evaluation of CAM 1

As a result of the composition analysis of CAM 1, it was found that, in the composition formula (I), m = 0.034, n = 0.022, p = 0.090, the element M was Co, and the element X was Al.

The values of $X_{at}/Li_{at}$, $\sigma X$, presence or absence of a diffraction peak within the range of $2\theta = 40°$ to $43°$, $L_A/L_B$, $I_A/I_B$, $L_C/L_D$, and $I_C/I_D$ of CAM 1 are shown in the table below. A spectrum at the time of measuring $X_{at}$ was indicated by Al2p. A spectrum at the time of measuring $Li_{at}$ was indicated by Li1s. A characteristic X-ray at the time of measuring $\sigma X$ was indicated by the AlK ray.

«Example 2»

1. Production of CAM 2

CAM 2 was produced by the same method as in Example 1 except that LiMO 1 and an additive raw material solution 1, which was an additive raw material, were mixed in proportions at which the mole ratio (Al/(Ni + Co + Al)) of Al in the additive raw material solution 1 in the sum of the mole ratio of Ni, Co, and Al in LiMO 1 and the mole ratio of Al in the additive raw material solution 1 became 0.3 mol%.

2. Evaluation of CAM 2

As a result of the composition analysis of CAM 2, it was found that, in the composition formula (I), m = 0.034, n = 0.024, p = 0.088, the element M was Co, and the element X was Al.

The values of $X_{at}/Li_{at}$, $\sigma X$, presence or absence of a diffraction peak within the range of $2\theta = 40°$ to $43°$, $L_A/L_B$, $I_A/I_B$, $L_C/L_D$, and $I_C/I_D$ of CAM 2 are shown in the table below. A spectrum at the time of measuring $X_{at}$ was indicated by Al2p. A spectrum at the time of measuring $Li_{at}$ was indicated by Li1s. A characteristic X-ray at the time of measuring $\sigma X$ was indicated by the AlK ray.

<<Example 3>>

1. Production of CAM 3

CAM 3 was produced by the same method as in Example 1 except that LiMO 1 and an additive raw material solution 2, which was an additive raw material, were mixed in proportions at which the mole ratio (Ti/(Ni + Co + Al + Ti)) of Ti in the additive raw material solution 2 in the sum of the mole ratio of Ni, Co, and Al in LiMO 1 and the mole ratio of Ti in the additive raw material solution 2 became 0.38 mol%.

As the additive raw material solution 2, a mixed solution of titanium (IV) tetrabutoxide, lithium ethoxide, and anhydrous ethanol was used. The mole ratio of titanium (IV) tetrabutoxide and lithium ethoxide was adjusted in proportions at which the mole ratio became 1: 1.

2. Evaluation of CAM 3

As a result of the composition analysis of CAM 3, it was found that, in the composition formula (I), m = 0.032, n = 0.024, p = 0.090, the element M was Co, and the element X was Al and Ti.

The values of $X_{at}/Li_{at}$, $\sigma X$, presence or absence of a diffraction peak within the range of $2\theta = 40°$ to $43°$, $L_A/L_B$, $I_A/I_B$, $L_C/L_D$, and $I_C/I_D$ of CAM 3 are shown in the table below. A spectrum at the time of measuring $X_{at}$ was indicated by Al2p and Ti2p. A spectrum at the time of measuring $Li_{at}$ was indicated by Li1s. A characteristic X-ray at the time of measuring $\sigma X$ was indicated by the AlK ray and the TiK ray.

<<Example 4>>

1. Production of CAM 4

CAM 4 was produced by the same method as in Example 3 except that the additive raw material solution 2 was mixed in a proportion at which the additive raw material solution 2 became 0.76 mol%.

2. Evaluation of CAM 4

As a result of the composition analysis of CAM 4, it was found that, in the composition formula (I), m = 0.032, n = 0.024, p = 0.090, the element M was Co, and the element X was Al and Ti.

The values of $X_{at}/Li_{at}$, $\sigma X$, presence or absence of a diffraction peak within the range of $2\theta = 40°$ to $43°$, $L_A/L_B$, $I_A/I_B$, $L_C/L_D$, and $I_C/I_D$ of CAM 4 are shown in the table below. A spectrum at the time of measuring $X_{at}$ was indicated by Al2p and Ti2p. A spectrum at the time of measuring $Li_{at}$ was indicated by Li1s. A characteristic X-ray at the time of measuring $\sigma X$ was indicated by the AlK ray and the TiK ray.

<<Example 5>>

1. Production of CAM 5

CAM 5 was produced by the same method as in Example 1 except that LiMO 1 and an additive raw material solution 3, which was an additive raw material, were mixed in proportions at which the mole ratio (Zr/(Ni + Co + Al + Zr)) of Zr in the additive raw material solution 3 in the sum of the mole ratio of Ni, Co, and Al in LiMO 1 and the mole ratio of Zr in the additive raw material solution 3 became 1.50 mol%.

As the additive raw material solution 3, a mixed solution of zirconium (IV) tetrabutoxide, lithium ethoxide, and anhydrous ethanol was used. The mole ratio of zirconium (IV) tetrabutoxide and lithium ethoxide was adjusted to proportions at which the mole ratio became 1:2.

2. Evaluation of CAM 5

As a result of the composition analysis of CAM 5, it was found that, in the composition formula (I), m = 0.034, n = 0.023, p = 0.090, the element M was Co, and the element X was Al and Zr.

The values of $X_{at}/Li_{at}$, $\sigma X$, presence or absence of a diffraction peak within the range of $2\theta = 40°$ to $43°$, $L_A/L_B$, $I_A/I_B$, $L_C/L_D$, and $I_C/I_D$ of CAM 5 are shown in the table below. A spectrum at the time of measuring $X_{at}$ was indicated by Al2p and Zr3d. A spectrum at the time of measuring $Li_{at}$ was indicated by Li1s. A characteristic X-ray at the time of measuring $\sigma X$ was indicated by the AlK ray and the ZrL ray.

«Example 6»

1. Production of CAM 6

CAM 6 was produced by the same method as in Example 5 except that the additive raw material solution 3 was mixed in a proportion at which the additive raw material solution 3 became 3.0 mol%.

2. Evaluation of CAM 6

As a result of the composition analysis of CAM 6, it was found that, in the composition formula (I), m = 0.051, n = 0.023, p = 0.091, the element M was Co, and the element X was Al and Zr.

The values of $X_{at}/Li_{at}$, $\sigma X$, presence or absence of a diffraction peak within the range of $2\theta = 40°$ to $43°$, $L_A/L_B$, $I_A/I_B$, $L_C/L_D$, and $I_C/I_D$ of CAM 6 are shown in the table below. A spectrum at the time of measuring $X_{at}$ was indicated by Al2p and Zr3d. A spectrum at the time of measuring $Li_{at}$ was indicated by Li1s. A characteristic X-ray at the time of measuring $\sigma X$ was indicated by the AlK ray and the ZrL ray.

<<Example 7>>

1. Production of CAM 7

CAM 5 was produced by the same method as in Example 1 except that LiMO 1 and an additive raw material solution 4, which was an additive raw material, were mixed in proportions at which the mole ratio (Nb/(Ni + Co + Al + Nb)) of Nb in the additive raw material solution 4 in the sum of the mole ratio of Ni, Co, and Al in LiMO 1 and the mole ratio of Nb in the additive raw material solution 4 became 1.3 mol%.

As the additive raw material solution 4, a mixed solution of niobium ethoxide, lithium ethoxide, and anhydrous ethanol was used. The mole ratio of niobium ethoxide and lithium ethoxide was adjusted to proportions at which the mole ratio became 1:1.

2. Evaluation of CAM 7

As a result of the composition analysis of CAM 7, it was found that, in the composition formula (I), m = 0.051, n = 0.025, p = 0.090, the element M was Co, and the element X was Al and Nb.

The values of $X_{at}/Li_{at}$, $\sigma X$, presence or absence of a diffraction peak within the range of $2\theta = 40°$ to $43°$, $L_A/L_B$, $I_A/I_B$, $L_C/L_D$, and $I_C/I_D$ of CAM 7 are shown in the table below. A spectrum at the time of measuring $X_{at}$ was indicated by Al2p and Nb3d. A spectrum at the time of measuring $Li_{at}$ was indicated by Li1s. A characteristic X-ray at the time of measuring $\sigma X$ was indicated by the AlK ray and the NbL ray.

<<Comparative Example 1>>

1. Production of CAM 8

LiMO 1 and aluminum oxide, which was an additive raw material, were mixed in proportions at which the mole ratio (Al/(Ni + Co + Al)) of Al in aluminum oxide in the sum of the mole ratio of Ni, Co, and Al in LiMO 1 and the mole ratio of Al in aluminum oxide became 2.1 mol%. After that, the mixture was mixed in a dry manner using a WARING blender and thermally treated at 700°C for 5 hours in the atmospheric atmosphere, thereby obtaining CAM 8.

2. Evaluation of CAM 8

As a result of the composition analysis of CAM 8, it was found that, in the composition formula (I), m = -0.002, n = 0.071, p = 0.091, the element M was Co, and the element X was Al.

The values of $X_{at}/Li_{at}$, $\sigma X$, presence or absence of a diffraction peak within the range of $2\theta = 40°$ to $43°$, $L_A/L_B$, $I_A/I_B$, $L_C/L_D$, and $I_C/I_D$ of CAM 8 are shown in the table below. A spectrum at the time of measuring $X_{at}$ was indicated by Al2p. A spectrum at the time of measuring $Li_{at}$ was indicated by Li1s. A characteristic X-ray at the time of measuring $\sigma X$ was indicated by the AlK ray.

<<Comparative Example 2>>

1. Production of CAM 9

LiMO 1 and titanium oxide, which was an additive raw material, were mixed in proportions at which the mole ratio (Ti/(Ni + Co + Al + Ti)) of Ti in titanium oxide in the sum of the mole ratio of Ni, Co, and Al in LiMO 1 and the mole ratio of Ti in titanium oxide became 1.1 mol%. After that, the mixture was mixed in a dry manner using a WARING blender and thermally treated at 700°C for 5 hours in the atmospheric atmosphere, thereby obtaining CAM 9.

2. Evaluation of CAM 9

As a result of the composition analysis of CAM 9, it was found that, in the composition formula (I), m = 0.043, n = 0.069, p = 0.092, the element M was Co, and the element X was Al and Ti.

The values of $X_{at}/Li_{at}$, $\sigma X$, presence or absence of a diffraction peak within the range of $2\theta = 40°$ to $43°$, $L_A/L_B$, $I_A/I_B$, $L_C/L_D$, and $I_C/I_D$ of CAM 9 are shown in the table below. A spectrum at the time of measuring $X_{at}$ was indicated by Al2p and Ti2p. A spectrum at the time of measuring $Li_{at}$ was indicated by Li1s. A characteristic X-ray at the time of measuring $\sigma X$ was indicated by the AlK ray and the TiK ray.

<<Comparative Example 3>>

1. Production of CAM 10

CAM 10 was obtained by the same method as in Comparative Example 2 except that titanium oxide, which was an additive raw material, was mixed in a proportion at which titanium oxide became 1.6 mol%.

2. Evaluation of CAM 10

As a result of the composition analysis of CAM 10, it was found that, in the composition formula (I), m = 0.009, n = 0.069, p = 0.090, the element M was Co, and the element X was Al and Ti.

The values of $X_{at}/Li_{at}$, $\sigma X$, presence or absence of a diffraction peak within the range of $2\theta = 40°$ to $43°$, $L_A/L_B$, $I_A/I_B$, $L_C/L_D$, and $I_C/I_D$ of CAM 10 are shown in the table below. A spectrum at the time of measuring $X_{at}$ was indicated by Al2p and Ti2p. A spectrum at the time of measuring $Li_{at}$ was indicated by Li1s. A characteristic X-ray at the time of measuring $\sigma X$ was indicated by the AlK ray and the TiL ray.

<<Comparative Example 4>>

1. Production of CAM 11

LiMO 1 and niobium oxide, which was an additive raw material, were mixed in proportions at which the mole ratio (Nb/(Ni + Co + Al + Nb)) of Nb in niobium oxide in the sum of the mole ratio of Ni, Co, and Al in LiMO 1 and the mole ratio of Nb in niobium oxide became 3.1 mol%. After that, the mixture was mixed in a dry manner using a WARING blender and thermally treated at 700°C for 5 hours in the atmospheric atmosphere, thereby obtaining CAM 11.

2. Evaluation of CAM 11

As a result of the composition analysis of CAM 11, it was found that, in the composition formula (I), m = 0.004, n = 0.115, p = 0.087, the element M was Co, and the element X was Al and Nb.

The values of $X_{at}/Li_{at}$, $\sigma X$, presence or absence of a diffraction peak within the range of $2\theta = 40°$ to $43°$, $L_A/L_B$, $I_A/I_B$, $L_C/L_D$, and $I_C/I_D$ of CAM 11 are shown in the table below. A spectrum at the time of measuring $X_{at}$ was indicated by Al2p and Nb3d. A spectrum at the time of measuring $Li_{at}$ was indicated by Li1s. A characteristic X-ray at the time of measuring $\sigma X$ was indicated by the AlK ray and the NbL ray.

<<Comparative Example 5>>

1. Production of CAM 12

LiMO 1 and tungsten oxide, which was an additive raw material, were mixed in proportions at which the mole ratio (W/(Ni + Co + Al + W)) of W in tungsten oxide in the sum of the mole ratio of Ni, Co, and Al in LiMO 1 and the mole ratio of W in tungsten oxide became 3.1 mol%. After that, the mixture was mixed in a dry manner using a WARING blender and thermally treated at 700°C for 5 hours in the atmospheric atmosphere, thereby obtaining CAM 12.

2. Evaluation of CAM 12

As a result of the composition analysis of CAM 12, it was found that, in the composition formula (I), m = -0.040, n = 0.123, p = 0.086, the element M was Co, and the element X was Al and W.

The values of $X_{at}/Li_{at}$, $\sigma X$, presence or absence of a diffraction peak within the range of $2\theta = 40°$ to 43°, $L_A/L_B$, $I_A/I_B$, $L_C/L_D$, and $I_C/I_D$ of CAM 12 are shown in the table below. A spectrum at the time of measuring $X_{at}$ was indicated by Al2p and W4f. A spectrum at the time of measuring $Li_{at}$ was indicated by Li1s. A characteristic X-ray at the time of measuring $\sigma X$ was indicated by the AlK ray and the WM ray.

<<Comparative Example 6>>

1. Production of CAM 13

CAM 13 was produced by the same method as in Example 1 except that LiMO 1 and an additive raw material solution 5, which was an additive raw material, were mixed in proportions at which the mole ratio (Ti/(Ni + Co + Al + Ti)) of Ti in the additive raw material solution 5 in the sum of the mole ratio of Ni, Co, and Al in LiMO 1 and the mole ratio of Ti in the additive raw material solution 5 became 0.76 mol%.

As the additive raw material solution 5, a mixed solution of titanium (IV) tetrabutoxide and anhydrous ethanol was used.

2. Evaluation of CAM 13

As a result of the composition analysis of CAM 13, it was found that, in the composition formula (I), m = 0.051, n = 0.049, p = 0.089, the element M was Co, and the element X was Al and Ti.

The values of $X_{at}/Li_{at}$, $\sigma X$, presence or absence of a diffraction peak within the range of $2\theta = 40°$ to 43°, $L_A/L_B$, $I_A/I_B$, $L_C/L_D$, and $I_C/I_D$ of CAM are shown in the table below. A spectrum at the time of measuring $X_{at}$ was indicated by Al2p and Ti2p. A spectrum at the time of measuring $Li_{at}$ was indicated by Li1s. A characteristic X-ray at the time of measuring $\sigma X$ was indicated by the AlK ray and the TiK ray.

<<Comparative Example 7>>

1. Production of CAM 14

CAM 14 was produced by the same method as in Example 1 except that LiMO 1 and an additive raw material solution 6, which was an additive raw material, were mixed in proportions at which the mole ratio (Zr/(Ni + Co + Al + Zr)) of Zr in the additive raw material solution 6 in the sum of the mole ratio of Ni, Co, and Al in LiMO 1 and the mole ratio of Zr in the additive raw material solution 6 became 3.0 mol%.

As the additive raw material solution 6, a mixed solution of zirconium (IV) tetrabutoxide and anhydrous ethanol was used.

2. Evaluation of CAM 14

As a result of the composition analysis of CAM 14, it was found that, in the composition formula (I), m = 0.061, n = 0.046, p = 0.089, the element M was Co, and the element X was Al and Zr.

The values of $X_{at}/Li_{at}$, $\sigma X$, presence or absence of a diffraction peak within the range of $2\theta = 40°$ to 43°, $L_A/L_B$, $I_A/I_B$, $L_C/L_D$, and $I_C/I_D$ of CAM 14 are shown in the table below. A spectrum at the time of measuring $X_{at}$ was indicated by Al2p and Zr3d. A spectrum at the time of measuring $Li_{at}$ was indicated by Li1s. A characteristic X-ray at the time of measuring $\sigma X$ was indicated by the AlK ray and the ZrL ray.

[Table 1]

| | Additive raw material | Amount added | ICP | | |
|---|---|---|---|---|---|
| | | Added X/mol% | m | n | p |
| Example 1 | Aluminum isopropoxide/lithium ethoxide | 0.15 | 0.034 | 0.022 | 0.090 |
| Example 2 | Aluminum isopropoxide/lithium ethoxide | 0.3 | 0.034 | 0.024 | 0.088 |
| Example 3 | Titanium (IV) tetrabutoxide/lithium ethoxide | 0.38 | 0.032 | 0.024 | 0.090 |
| Example 4 | Titanium (IV) tetrabutoxide/lithium ethoxide | 0.76 | 0.032 | 0.024 | 0.090 |
| Example 5 | Zirconium (IV) tetrabutoxide/lithium ethoxide | 1.5 | 0.034 | 0.023 | 0.090 |
| Example 6 | Zirconium (IV) tetrabutoxide/lithium ethoxide | 3.0 | 0.051 | 0.023 | 0.091 |
| Example 7 | Niobium ethoxide/lithium ethoxide | 1.3 | 0.051 | 0.025 | 0.090 |
| Comparative Example 1 | Alumina | 2.1 | -0.002 | 0.071 | 0.091 |
| Comparative Example 2 | Titanium oxide | 1.1 | 0.043 | 0.069 | 0.092 |
| Comparative Example 3 | Titanium oxide | 1.6 | 0.009 | 0.069 | 0.090 |
| Comparative Example 4 | Niobium oxide | 3.1 | 0.004 | 0.115 | 0.087 |
| Comparative Example 5 | Tungsten oxide | 3.1 | -0.040 | 0.123 | 0.086 |
| Comparative Example 6 | Titanium (IV) tetrabutoxide | 0.76 | 0.051 | 0.049 | 0.089 |
| Comparative Example 7 | Zirconium (IV) tetrabutoxide | 3.0 | 0.061 | 0.046 | 0.089 |

[Table 2]

| | Diffraction peak in $2\theta$ = 40° to 43° | $L_A$ | $L_B$ | $I_A$ | $I_B$ | $L_C$ | $L_D$ | $I_C$ | $I_D$ |
|---|---|---|---|---|---|---|---|---|---|
| Example 1 | Absent | 503 | 707 | 800 | 1832 | 866 | 514 | 12874 | 10569 |
| Example 2 | Absent | 764 | 825 | 643 | 1533 | 915 | 588 | 13304 | 10257 |
| Example 3 | Absent | 309 | 652 | 946 | 1948 | 782 | 527 | 13074 | 10680 |
| Example 4 | Absent | 528 | 580 | 772 | 1822 | 905 | 550 | 12114 | 10008 |
| Example 5 | Absent | 435 | 522 | 901 | 1893 | 797 | 517 | 13399 | 10636 |
| Example 6 | Absent | 442 | 637 | 905 | 1663 | 866 | 536 | 13098 | 10270 |
| Example 7 | Absent | 764 | 592 | 563 | 1833 | 830 | 502 | 12137 | 10055 |
| Comparative Example 1 | Absent | 404 | 623 | 1051 | 1725 | 752 | 533 | 12240 | 10141 |
| Comparative Example 2 | Absent | 832 | 695 | 721 | 1610 | 857 | 502 | 12406 | 10203 |
| Comparative Example 3 | Present | 442 | 529 | 727 | 1879 | 629 | 491 | 11190 | 9776 |
| Comparative Example 4 | Present | 467 | 418 | 455 | 1902 | 752 | 416 | 7836 | 9425 |
| Comparative Example 5 | Present | 1715 | 1026 | 348 | 788 | 624 | 421 | 7864 | 7595 |
| Comparative Example 6 | Absent | 489 | 744 | 815 | 1690 | 958 | 533 | 11094 | 9049 |

(continued)

| | Diffraction peak in 2θ = 40° to 43° | $L_A$ | $L_B$ | $I_A$ | $I_B$ | $L_C$ | $L_D$ | $I_C$ | $I_D$ |
|---|---|---|---|---|---|---|---|---|---|
| Comparative Example 7 | Absent | 632 | 713 | 706 | 1551 | 1019 | 536 | 11806 | 9722 |

[Table 3]

| | $X_{at}$ | $Li_{at}$ | $X_{at}/Li_{at}$ | $\sigma X$ | $L_A/L_B$ | $I_A/I_B$ | $L_C/L_D$ | $I_C/I_D$ | Initial discharge capacity | Cycle retention rate |
|---|---|---|---|---|---|---|---|---|---|---|
| Example 1 | 22.6 | 50.3 | 0.45 | 1.1 | 0.71 | 0.44 | 1.68 | 1.22 | 200.1 | 90.8 |
| Example 2 | 33.4 | 52.0 | 0.64 | 3.7 | 0.93 | 0.42 | 1.56 | 1.30 | 198.8 | 91.0 |
| Example 3 | 18.7 | 60.0 | 0.31 | 1.2 | 0.47 | 0.49 | 1.48 | 1.22 | 200.0 | 89.3 |
| Example 4 | 16.6 | 52.4 | 0.32 | 0.2 | 0.91 | 0.42 | 1.64 | 1.21 | 199.0 | 88.1 |
| Example 5 | 17.5 | 49.9 | 0.35 | 1.9 | 0.83 | 0.48 | 1.54 | 1.26 | 200.6 | 91.6 |
| Example 6 | 17.4 | 54.4 | 0.32 | 2.2 | 0.69 | 0.54 | 1.61 | 1.28 | 198.7 | 91.5 |
| Example 7 | 18.9 | 62.3 | 0.30 | 8.9 | 1.29 | 0.31 | 1.65 | 1.21 | 198.1 | 89.4 |
| Comparative Example 1 | 5.5 | 89.4 | 0.06 | 3.3 | 0.65 | 0.61 | 1.41 | 1.21 | 191.7 | 79.0 |
| Comparative Example 2 | 4.5 | 93.1 | 0.05 | 4.3 | 1.20 | 0.45 | 1.71 | 1.22 | 185.8 | 43.9 |
| Comparative Example 3 | 12.4 | 81.1 | 0.15 | 3.2 | 0.84 | 0.39 | 1.28 | 1.14 | 190.4 | 45.7 |
| Comparative Example 4 | 19.2 | 65.3 | 0.29 | 14.4 | 1.12 | 0.24 | 1.81 | 0.83 | 92.6 | 25.3 |
| Comparative Example 5 | 9.8 | 64.2 | 0.15 | 23.4 | 1.67 | 0.44 | 1.48 | 1.04 | 110.9 | 44.2 |
| Comparative Example 6 | 29.1 | 50.9 | 0.57 | 13.2 | 0.66 | 0.48 | 1.80 | 1.23 | 160.8 | 84.0 |
| Comparative Example 7 | 18.0 | 74.5 | 0.24 | 13.5 | 0.89 | 0.46 | 1.90 | 1.21 | 185.6 | 90.8 |

As shown in the above-described results, it was possible to confirm that, in a case where CAMs of Examples 1 to 7 were used, the cycle retention rates were higher and the initial discharge capacities were also larger in all of the examples than those of the comparative examples.

[Reference Signs List]

    1: Separator
    2: Positive electrode
    3: Negative electrode
    4: Electrode group
    5: Battery can
    6: Electrolyte solution
    7: Top insulator
    8: Sealing body

10: Lithium secondary battery
21: Positive electrode lead
31: Negative electrode lead
100: Laminate
110: Positive electrode
111: Positive electrode active material layer
112: Positive electrode current collector
113: External terminal
120: Negative electrode
121: Negative electrode electrolyte layer
122: Negative electrode current collector
123: External terminal
130: Solid electrolyte layer
200: Exterior body
200a: Opening portion
1000: All-solid-state lithium secondary battery

**Claims**

1. A positive electrode active material for a lithium secondary battery, containing at least Li, Ni, and an element X, comprising particles including a coating on a surface of a lithium metal composite oxide,

   wherein the coating contains the element X,
   the element X is one or more elements selected from the group consisting of Al, Ti, Nb, Zr, P, B, Mg, Ba, Si, Sn, and W, and
   a formula (1) and a formula (2) are satisfied,

$$(1)\ 0.20 \leq X_{at}/Li_{at}$$

   ($X_{at}$ is an abundance of the element X near a surface of the particle, which is measured by X-ray photoelectron spectroscopy, and $Li_{at}$ is an abundance of Li near the surface of the particle, which is measured by X-ray photoelectron spectroscopy), and

$$(2)\ \sigma X \leq 13.0$$

   ($\sigma X$ is a standard deviation calculated from the abundances of the element X near the surfaces of a plurality of the particles, which is measured by scanning electron microscope-energy dispersive X-ray spectroscopy).

2. The positive electrode active material for the lithium secondary battery according to Claim 1, wherein no diffraction peak is observed within a range of diffraction angles $2\theta = 40°$ to $43°$ in X-ray diffraction measurement using CuK$\alpha$ rays.

3. The positive electrode active material for the lithium secondary battery according to Claim 1 or 2,

   wherein, in the X-ray diffraction measurement using CuKa rays, two diffraction peaks are present within a range of $2\theta = 38.5 \pm 1°$, and, when, between the two diffraction peaks, the diffraction peak on a low angle side is defined as a peak A, and the diffraction peak on a high angle side is defined as a peak B, a formula (3) and a formula (4) are satisfied,

$$(3)\ L_A/L_B \leq 1.50$$

   ($L_A$ is a crystallite size obtained from the peak A, and $L_B$ is a crystallite size obtained from the peak B), and

$$(4)\ 0.25 \leq I_A/I_B \leq 0.60$$

($I_A$ is an integrated intensity of the peak A, and $I_B$ is an integrated intensity of the peak B).

4. The positive electrode active material for the lithium secondary battery according to any one of Claims 1 to 3,

wherein, in the X-ray diffraction measurement using CuK$\alpha$ rays, when a diffraction peak present within a range of $2\theta = 18.5 \pm 1°$ is defined as a peak C, and a diffraction peak present within a range of $2\theta = 44.5 \pm 1°$ is defined as a peak D, a formula (5) and a formula (6) are satisfied,

$$(5)\ 1.25 \leq L_C/L_D$$

(Lc is a crystallite size obtained from the peak C, and $L_D$ is a crystallite size obtained from the peak D), and

$$(6)\ 1.1 \leq I_C/I_D$$

($I_C$ is an integrated intensity of the peak C, and In is an integrated intensity of the peak D).

5. A positive electrode for a lithium secondary battery, comprising:
the positive electrode active material for the lithium secondary battery according to any one of Claims 1 to 4.

6. A lithium secondary battery, comprising:
the positive electrode for the lithium secondary battery according to Claim 5.

FIG. 1A

FIG. 1B

FIG. 2

FIG. 3

<table>
<tr><td colspan="2">**INTERNATIONAL SEARCH REPORT**</td><td>International application No.<br><br>**PCT/JP2021/032127**</td></tr>
</table>

**A.    CLASSIFICATION OF SUBJECT MATTER**

*H01M 4/36*(2006.01)i; *H01M 4/525*(2010.01)i
FI:   H01M4/525; H01M4/36 C

According to International Patent Classification (IPC) or to both national classification and IPC

**B.    FIELDS SEARCHED**

Minimum documentation searched (classification system followed by classification symbols)

H01M4/36; H01M4/525

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2019-57450 A (TOYOTA MOTOR CORP.) 11 April 2019 (2019-04-11) | 1-6 |
| A | JP 2017-536648 A (LG CHEM, LTD.) 07 December 2017 (2017-12-07) | 1-6 |
| A | WO 2019/021806 A1 (PANASONIC INTELLECTUAL PROPERTY MANAGEMENT CO., LTD.) 31 January 2019 (2019-01-31) | 1-6 |
| A | WO 2016/035853 A1 (MITSUI MINING & SMELTING CO., LTD.) 10 March 2016 (2016-03-10) | 1-6 |

☐ Further documents are listed in the continuation of Box C.          ☑ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **22 October 2021** | **02 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/032127**

| Patent document cited in search report | | | Publication date (day/month/year) | Patent family member(s) | | | Publication date (day/month/year) |
|---|---|---|---|---|---|---|---|
| JP | 2019-57450 | A | 11 April 2019 | US | 2019/0097219 | A1 | |
| | | | | CN | 109546096 | A | |
| JP | 2017-536648 | A | 07 December 2017 | US | 2017/0222211 | A1 | |
| | | | | WO | 2016/053051 | A1 | |
| | | | | EP | 3203556 | A1 | |
| | | | | KR | 10-2016-0040116 | A | |
| | | | | CN | 106797028 | A | |
| WO | 2019/021806 | A1 | 31 January 2019 | US | 2020/0235377 | A1 | |
| | | | | CN | 110720152 | A | |
| WO | 2016/035853 | A1 | 10 March 2016 | US | 2017/0012286 | A1 | |
| | | | | KR | 10-2017-0045148 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020149334 A
- WO 2019103037 A
- JP 2002201028 A
- WO 2019098384 A1
- US 20200274158 A1
- JP 2000030686 A
- US 20090111025 A1

- JP 2004095400 A
- WO 2020208872 A1
- US 20160233510 A1
- US 20120251871 A1
- US 20180159169 A1
- US 20200259213 A1